# EUROPEAN PATENT APPLICATION

(11) **EP 4 845 297 A1**
(43) Date of publication of application: **25.11.2026**
(21) Application number: 25751298.8
(22) Date of filing: 23.01.2025
(51) Int. Cl.: H04W 76/27

(54) **COMMUNICATION METHOD, APPARATUS AND SYSTEM**

(30) Priority: 08.02.2024 CN 202410177003
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); FAN, Qiang, Shenzhen, Guangdong 518129 (CN); LI, Hao, Shenzhen, Guangdong 518129 (CN)
(74) Representative: Pfenning, Meinig & Partner mbB
(86) International application number: PCT/CN2025/074305
(87) International publication number: WO 2025/167696

(57) **Abstract**

Embodiments of this application provide a communication method, apparatus, and system. The method includes: The terminal supports one RRC state, and in the RRC state, the terminal supports a plurality of modes. The terminal may transit between different modes based on different data transmission requirements. During mode transition of the terminal, the terminal does not need to perform a procedure like resuming an RRC connection between the terminal and an access network device. Therefore, this reduces latency and energy consumption overhead caused by RRC state transitions of the terminal.

## Description

### CROSS-REFERENCE TO RELATED APPLICATIONS

This application claims priority to Chinese Patent Application No. 202410177003.6, filed with the China National Intellectual Property Administration on February 8, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a wireless communication system, a terminal supports three radio resource control (radio resource control, RRC) states: an RRC connected state, an RRC inactive state, and an RRC idle state. The terminal may transit between different RRC states. For example, when no data transmission is performed, the terminal may transit to the RRC inactive state or the RRC idle state. When data transmission is performed, the terminal may transit to the RRC connected state. When the terminal transits from the RRC inactive state or the RRC idle state to the RRC connected state, the terminal needs to perform a series of procedures to resume an RRC connection between the terminal and the access network device. Consequently, RRC state transitions of the terminal cause considerable latency and overhead.

### SUMMARY

This application provides a communication method, apparatus, and system, to reduce latency and overhead of a terminal.

According to a first aspect, a communication method is provided. The method is applied to a terminal, and the method may be performed by the terminal or a module (for example, a chip or a circuit) in the terminal, and includes: entering a first mode, where the first mode is used to perform a first procedure, and the first procedure is used to establish a terminal context on a core network side and/or a terminal context on an access network side; and transiting to a second mode or a third mode, where the second mode or the third mode is used for communication between the terminal and a network, the second mode corresponds to a first requirement of the terminal, the third mode corresponds to a second requirement of the terminal, and the first requirement or the second requirement includes a requirement for transmission between the terminal and the network.

Based on the foregoing design, the terminal supports one RRC state, which is also referred to as a single RRC state (single RRC state). In the RRC state, the terminal supports a plurality of modes. The terminal may transit between different modes based on different data transmission requirements. During mode transition of the terminal, the terminal does not need to perform a procedure like resuming an RRC connection between the terminal and an access network device. Therefore, this reduces latency and energy consumption overhead caused by RRC state transitions of the terminal.

In a possible design, the method further includes: determining a first configuration and/or a second configuration, where the first configuration is used by the terminal to communicate with the access network device in the second mode, and the second configuration is used by the terminal to communicate with the access network device in the third mode.

In a possible design, the determining the first configuration and/or the second configuration includes: activating the first configuration and/or the second configuration, and sending first indication information to the access network device, where the first indication information indicates the first configuration and/or the second configuration; or receiving second indication information from the access network device, where the second indication information indicates the first configuration and/or the second configuration; or receiving first configuration information from the access network device, where the first configuration information is used to configure the first configuration and/or the second configuration.

In a possible design, the first configuration includes at least one of the following: a first sub-configuration, a second sub-configuration, or a third sub-configuration. The first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

In a possible design, the first signal includes a downlink signal and/or an uplink signal, the downlink signal indicates an uplink transmission resource and/or a downlink transmission resource, and the uplink signal is used to request the uplink transmission resource and/or the downlink transmission resource.

In a possible design, the transiting to the second mode or the third mode includes: transiting to the second mode or the third mode based on a requirement, where the requirement includes the first requirement or the second requirement.

In a possible design, the transiting to the second mode or the third mode based on the requirement includes: transiting to the second mode based on the first requirement; or transiting to the third mode based on the second requirement.

In a possible design, the method further includes: determining the first requirement or the second requirement based on a transmission status of the terminal.

In a possible design, the transmission status of the terminal includes at least one of the following: a service type of the terminal, a service data amount of the terminal, quality of service QoS corresponding to service data of the terminal, or a transmission parameter of service data of the terminal.

In a possible design, the method further includes: sending the transmission status of the terminal to a first module, where the first module is configured to determine the requirement through artificial intelligence AI; and receiving third indication information from the first module, where the third indication information indicates the requirement.

In a possible design, the method further includes: sending fourth indication information to the access network device, where the fourth indication information indicates to transit to the second mode or the third mode.

In a possible design, the method further includes: receiving fifth indication information from the access network device, where the fifth indication information indicates to transit to the second mode or the third mode.

In a possible design, the transiting to the second mode or the third mode includes: transiting to the second mode or the third mode based on the fifth indication information.

According to a second aspect, a communication method is provided, and is a method on a peer side of the method in the first aspect. For beneficial effect, refer to descriptions of the first aspect. The method is applied to an access network device. The method may be performed by the access network device, or a module (for example, a chip or a circuit) used in the access network device, or a logic node (for example, a CU, a DU, or an RU), a logic module, software, or the like that implements partial or all functions of the access network device. The method includes: determining that a terminal transits to a second mode or a third mode, where the second mode corresponds to a first requirement of the terminal, the third mode corresponds to a second requirement of the terminal, and the first requirement or the second requirement includes a requirement for transmission between the terminal and a network; and communicating with the terminal based on the second mode or the third mode.

In a possible design, the determining that the terminal transits to the second mode or the third mode includes: receiving fourth indication information from the terminal, where the fourth indication information indicates to transit to the second mode or the third mode.

In a possible design, the determining that the terminal transits to the second mode or the third mode includes: determining, based on a requirement, that the terminal transits to the second mode or the third mode.

In a possible design, the determining, based on the requirement, that the terminal transits to the second mode or the third mode includes: determining, based on the first requirement, that the terminal transits to the second mode; or determining, based on the second requirement, that the terminal transits to the third mode.

In a possible design, the method further includes: determining the first requirement or the second requirement based on a transmission status of the terminal.

In a possible design, the method further includes: receiving sixth indication information from a core network device, where the sixth indication information indicates the transmission status of the terminal.

In a possible design, the transmission status of the terminal includes at least one of the following: a service type of the terminal, a service data amount of the terminal, quality of service QoS corresponding to service data of the terminal, or a transmission parameter of service data of the terminal.

In a possible design, the method further includes: sending the transmission status of the terminal to a first module, where the first module is configured to determine the requirement through artificial intelligence AI; and receiving seventh indication information from the first module, where the seventh indication information indicates the requirement.

In a possible design, the method further includes: sending fifth indication information to the terminal, where the fifth indication information indicates to transit to the second mode or the third mode.

In a possible design, the method further includes: determining a first configuration and/or a second configuration, where the first configuration is used by the terminal to communicate with the access network device in the second mode, and the second configuration is used by the terminal to communicate with the access network device in the third mode.

In a possible design, the determining the first configuration and/or the second configuration includes: receiving first indication information from the terminal, where the first indication information indicates the first configuration and/or the second configuration; or activating the first configuration and/or the second configuration, and sending second indication information to the terminal, where the second indication information indicates the first configuration and/or the second configuration; or generating the first configuration and/or the second configuration, and sending first configuration information to the terminal, where the first configuration information is used to configure the first configuration and/or the second configuration.

In a possible design, the first configuration includes at least one of the following: a first sub-configuration, a second sub-configuration, or a third sub-configuration.

The first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

In a possible design, the first signal includes a downlink signal and/or an uplink signal, the downlink signal indicates an uplink transmission resource and/or a downlink transmission resource, and the uplink signal is used to request the uplink transmission resource and/or the downlink transmission resource.

In a possible design, the generating the first configuration and/or the second configuration includes: A first unit generates a third configuration, where the third configuration is a configuration corresponding to the first unit. A second unit generates a fourth configuration, and sends the fourth configuration to the first unit, where the fourth configuration is a configuration corresponding to the second unit. The first unit generates the first configuration and/or the second configuration based on the third configuration and the fourth configuration.

In a possible design, the sending the fifth indication information to the terminal includes: The first unit sends the fifth indication information to the second unit.

The second unit sends the fifth indication information to the terminal.

In a possible design, the sending the fifth indication information to the terminal includes: The first unit sends eighth indication information to the second unit, where the eighth indication information indicates to transit to the second mode or the third mode. The second unit sends the fifth indication information to the terminal.

According to a third aspect, an apparatus is provided. The apparatus can implement the method in the first aspect. For example, the apparatus includes a corresponding means (means) for performing the first aspect. The apparatus may be implemented by hardware, implemented by software, or implemented by hardware executing corresponding software. The apparatus may be a first communication apparatus, for example, may be a terminal, or a communication module in a terminal, or a chip or a chip system, for example, a modem chip (which is also referred to as a baseband chip), a system on chip (system on chip, SoC) including a modem module, or a system in package (system in package, SIP), that is responsible for a communication function in a terminal.

In a design, the apparatus includes a unit for implementing the first aspect.

In a design, the apparatus includes a processor. The processor is configured to execute a computer program or instructions stored in a memory, to enable the apparatus to implement the method in the first aspect. Optionally, the apparatus further includes the memory.

In a design, the apparatus includes a processor and an interface circuit. The interface circuit is configured to: receive a signal from other apparatuses than the apparatus and transmit the signal to the processor, or send a signal from the processor to other apparatuses than the apparatus. The processor is configured to implement the method in the first aspect by using a logic circuit or by executing code instructions.

In a design, the apparatus may be a first communication apparatus, or may be a module or a unit (for example, a chip, a chip system, or a circuit), in a first communication apparatus, that one-to-one corresponds to the method/operation/step/action described in the first aspect, or may be used in cooperation with a first communication apparatus.

According to a fourth aspect, an apparatus is provided. The apparatus can implement the method in the second aspect. For example, the apparatus includes a corresponding means (means) for performing the second aspect. The apparatus may be implemented by hardware, implemented by software, or implemented by hardware executing corresponding software. The apparatus may be a second communication apparatus, for example, may be an access network device, or a module (for example, a chip or a circuit) used in an access network device, or a logic node (for example, a CU, a DU, or an RU), a logic module, software, or the like that implements partial or all functions of the access network device.

In a design, the apparatus includes a unit for implementing the second aspect.

In a design, the apparatus includes a processor. The processor is configured to execute a computer program or instructions stored in a memory, to enable the apparatus to implement the method in the second aspect. Optionally, the apparatus further includes the memory.

In a design, the apparatus includes a processor and an interface circuit. The interface circuit is configured to: receive a signal from other apparatuses than the apparatus and transmit the signal to the processor, or send a signal from the processor to other apparatuses than the apparatus. The processor is configured to implement the method in the second aspect by using a logic circuit or by executing code instructions.

In a design, the apparatus may be a second communication apparatus, or may be a module or a unit (for example, a chip, a chip system, or a circuit), in a second communication apparatus, that one-to-one corresponds to the method/operation/step/action described in the second aspect, or may be used in cooperation with a second communication apparatus.

According to a fifth aspect, a computer-readable storage medium is provided, and stores a computer program or instructions. When the computer program or the instructions are run on a computer, the computer is enabled to implement the method in the first aspect or the second aspect.

According to a sixth aspect, a computer program product is provided, and includes a computer program or instructions. When the computer program or the instructions are run by a computer, the method in the first aspect or the second aspect is performed.

According to a seventh aspect, a chip is provided, and includes a processor. The processor is coupled to a memory, and is configured to execute a computer program or instructions stored in the memory, to enable the chip to implement the method in the first aspect or the second aspect.

According to an eighth aspect, a communication system is provided, and includes a first communication apparatus and a second communication apparatus. The first communication apparatus is configured to implement the method in the first aspect, and the second communication apparatus is configured to implement the method in the second aspect.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of a mode transition according to an embodiment of this application;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is a diagram of an architecture of an access network device according to an embodiment of this application;
FIG. 10 is another schematic flowchart of a communication method according to an embodiment of this application;
FIG. 11 is another schematic flowchart of a communication method according to an embodiment of this application;
FIG. 12 is a diagram of a structure of an apparatus according to an embodiment of this application; and
FIG. 13 is a diagram of another structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method, a function description, and the like in a method embodiment may also be applied to an apparatus embodiment or a system embodiment.

Various numbers and terms such as "first" and "second" in embodiments of this application are merely used for differentiation for ease of description, but are not intended to limit the scope of embodiments of this application. The sequence numbers of the foregoing processes do not mean execution sequences, and the execution sequences of the processes should be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. "Including at least one of A, B, or C" may indicate: including A; including B; including C; including A and B; including A and C; including B and C; and including A, B, and C.

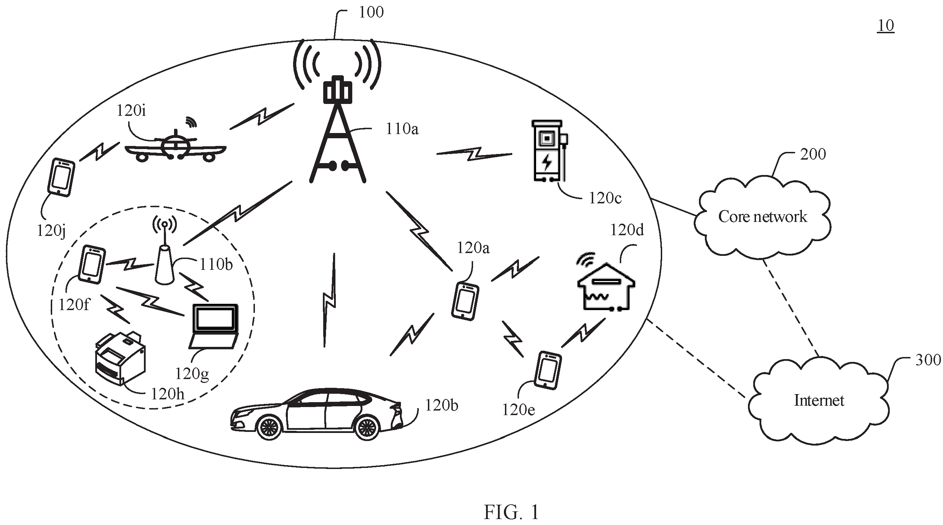

FIG. 1 is a diagram of a possible and non-limiting system. As shown in FIG. 1, a communication system 10 includes a radio access network (radio access network, RAN) 100 and a core network (core network, CN) 200. Optionally, the Internet 300 is further included.

The RAN 100 includes at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1).

The terminal 120 may be connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network device and a logical function of the radio access network.

The RAN 100 may be a cellular system related to the 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. In subsequent descriptions of this application, unless otherwise specified, the "access network device" is used for description. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some of functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or some of functions of the RAN node.

In another possible scenario, the plurality of RAN nodes cooperate to assist the terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), Internet of things (Internet of things, IOT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The solutions provided in embodiments of this application may be applied to a 5G communication system, a 6G communication system, an integrated sensing and communication system, or even another communication system in future evolution. This is not limited. In the following descriptions, communication between the access network device and the terminal is mainly used as an example for description. The solutions in embodiments of this application may also be applied to other application scenarios, for example, communication between base stations, communication between terminals, and communication in the Internet of vehicles, the Internet of things, or the industrial Internet. This is not limited.

In a solution, the terminal supports three radio resource control (radio resource control, RRC) states: an RRC connected state (RRC_connected), an RRC idle state (RRC_idle), and an RRC inactive state (RRC_inactive). The terminal may transit between the foregoing three RRC states based on different data transmission requirements. For example, when no data transmission is performed, the terminal may transit to the RRC idle state or the RRC inactive state, to reduce power consumption of the terminal. When data transmission is performed, the terminal transits from the RRC idle state to the RRC connected state. For example, the terminal in the RRC idle state can transit from the RRC idle state to the RRC connected state only after random access, RRC connection establishment, initial terminal context establishment, RRC configuration, and another procedure are performed. Alternatively, the terminal transits from the RRC inactive state to the RRC connected state. For example, the terminal in the RRC inactive state can transit from the RRC inactive state to the RRC connected state only after RRC connection resume, terminal context obtaining, RRC configuration, and another procedure are performed. The terminal transits between the three RRC states, resulting in considerable latency and power consumption overhead.

In view of this, an embodiment of this application provides a communication method. In the method, a terminal may transit between different modes based on different data transmission requirements. During mode transition of the terminal, the terminal does not need to perform a procedure like resuming an RRC connection between the terminal and an access network device. Therefore, this reduces latency and energy consumption overhead caused by RRC state transitions of the terminal.

### [Embodiment 1]

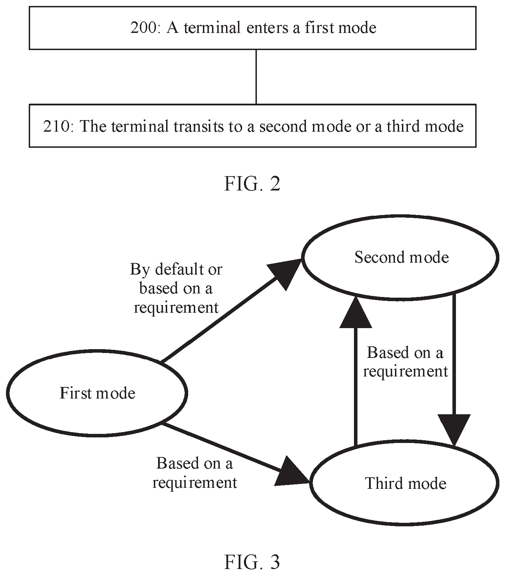

As shown in FIG. 2, an embodiment of this application provides a schematic flowchart, including the following steps.

Step 200: A terminal enters a first mode.

For example, the first mode is used to perform a first procedure, and the first procedure is used to establish a terminal context on a core network side and/or a terminal context on an access network side.

Step 210: The terminal transits to a second mode or a third mode.

In a possible implementation, a process of step 210 includes: The terminal transits from a first mode to the second mode or the third mode. For example, upon completion of the first mode, the terminal transits to the second mode or the third mode. For example, upon completion of the first mode, the terminal transits to the second mode by default. Alternatively, the terminal transits to the second mode or the third mode based on a requirement. For example, the terminal transits to the second mode based on a first requirement. The terminal transits to the third mode based on a second requirement. Alternatively, an access network device may trigger the terminal to perform a mode transition. For example, the access network device determines, based on the requirement, that the terminal transits to the second mode or the third mode. The access network device sends indication information to the terminal, and the indication information may be referred to as fifth indication information. When receiving the indication information, the terminal transits to the second mode or the third mode based on an indication of the indication information. Specifically, the terminal may transit from the first mode to the second mode or the third mode. Optionally, in the descriptions of this application, the requirement may also be referred to as a transmission requirement or a data transmission requirement. For example, the first requirement may also be referred to as a first transmission requirement or a first data transmission requirement, and the second requirement may also be referred to as a second transmission requirement or a second data transmission requirement.

In another possible implementation, upon completion of the first mode, the terminal transits to the second mode or the third mode. Then, the terminal may transit between the second mode and the third mode. A process of step 210 includes: The terminal transits from the second mode to the third mode, or transits from the third mode to the second mode. The terminal may transit between the second mode and the third mode based on the requirement. Alternatively, an access network device may trigger the terminal to perform a mode transition. For example, the access network device sends indication information to the terminal, and the indication information may be referred to as fifth indication information. The terminal transits to the second mode or the third mode based on an indication of the indication information. For example, the terminal transits from the second mode to the third mode or transits from the third mode to the second mode.

Based on the foregoing design, the terminal may transit between the second mode and the third mode based on the requirement, and does not need to perform a procedure like RRC connection establishment during mode transition. This reduces latency and overhead caused by RRC state transitions.

It may be understood that, in the procedure in FIG. 2, the solutions provided in embodiments of this application are described from a perspective of the terminal. From a perspective of the access network device, the access network device may determine that the terminal transits to the second mode or the third mode. The second mode corresponds to the first requirement of the terminal, and the third mode corresponds to the second requirement of the terminal. The access network device communicates with the terminal based on the second mode or the third mode. For example, a solution in which the access network device determines that the terminal transits to the second mode or the third mode includes: The access network device receives fourth indication information from the terminal, where the fourth indication information indicates to transit to the second mode or the third mode. Alternatively, the access network device may determine, based on the requirement, that the terminal transits to the second mode or the third mode. For a specific process, refer to the following descriptions.

It may be understood that, in the foregoing descriptions, there are two types of requirements for transmission between the terminal and a network: the first requirement and the second requirement. The first requirement corresponds to the second mode, and the second requirement corresponds to the third mode. In other words, when the requirement for transmission between the terminal and the network is the first requirement, the terminal may transit to the second mode. Alternatively, when the requirement for transmission between the terminal and the network is the second requirement, the terminal may transit to the third mode. The foregoing process is merely an example for description, and is not intended to limit embodiments of this application. For example, requirements for transmission between the terminal and the network include N requirements, where N is an integer greater than 1. Based on the N requirements, the terminal may transit between M modes, where M is an integer greater than 1, and values of M and N may be equal or unequal. For example, the value of N being equal to the value of M indicates that there is a one-to-one relationship between requirements and modes, that is, one requirement corresponds to one mode. Alternatively, the value of N being greater than the value of M indicates that there is a many-to-one or one-to-one relationship between requirements and modes. For example, a plurality of requirements may correspond to one mode. Alternatively, the value of N being less than the value of M indicates that there is a one-to-many relationship or a one-to-one relationship between requirements and modes. For example, one requirement corresponds to a plurality of modes. When one requirement corresponds to a plurality of modes, a specific mode in the plurality of modes to which the terminal transits is not limited. For example, the terminal may transit to any one of the plurality of modes. Alternatively, the terminal transits to one of the plurality of modes or the like based on another factor.

Optionally, in this embodiment of this application, based on different phases of the terminal, the terminal has three modes: the first mode, the second mode, and the third mode.

Specifically, the first mode is an initialization phase after the terminal is powered on. In this phase, the terminal may complete initialization operation procedures such as initial network selection, terminal registration, authentication, security negotiation, and terminal context establishment.

The second mode is a phase in which data transmission is not performed or small data is transmitted, and supports a dedicated configuration, a common network configuration, mobility management, uplink/downlink data transmission, and the like of the terminal. For details, refer to the following descriptions.

The third mode is a phase in which large data is transmitted, the network provides a dedicated configuration, and stronger terminal capabilities can be invoked, to implement service transmission with better quality of service (quality of service, QoS).

It may be understood that, in embodiments of this application, a name of the "mode" is not limited. For example, the first mode may also be referred to as a mode 0 (mode0), the second mode may also be referred to as a mode 1 (mode1) or a default mode (default mode), and the third mode may also be referred to as a mode 2 (mode2), an enhanced mode (enhanced mode), or a configurable mode (configurable mode).

It may be understood that the transition may be performed between the first mode, the second mode, or the third mode. For example, as shown in FIG. 3, upon completion of the first mode, the terminal may transit to the second mode by default. Alternatively, the terminal may transit to the second mode or the third mode based on the requirement. Then, the terminal transits between the second mode and the third mode. It may be understood that a process in which the terminal transits between the second mode and the third mode may be that the terminal triggers a transition based on a requirement, or that the access network device triggers a transition of the terminal based on a requirement, or the like.

Optionally, the second mode and the third mode may be transited back to the first mode. In other words, the terminal may transit from the second mode or the third mode to the first mode. For example, when the network side fails to obtain the terminal context, the terminal context needs to be reestablished, and the terminal may transit back from the second mode or the third mode to the first mode.

The following describes in detail solutions in embodiments of this application.
1. The terminal enters the first mode.

For example, after the terminal is powered on, the terminal enters the first mode, and performs a first procedure. The first procedure may be referred to as an initialization procedure. The first procedure includes at least one of the following: frequency scanning, selection of an access network device and a serving cell by the terminal, random access, determining of a transmission resource, or exchanging of security parameters between the terminal and a core network device and the access network device. A process of exchanging the security parameters between the terminal and the core network device and the access network device includes procedures such as authentication and security negotiation. For example, after the terminal is powered on, the terminal may perform the first procedure, and the first procedure includes at least one of the following:

Frequency scanning: downlink synchronization is implemented between the terminal and the network.

Selection of an access network device and a serving cell: For example, the terminal may perform public land mobile network (public land mobile network, PLMN) selection and access network device selection. Further, the terminal may select a cell from cells provided by the access network device, to communicate with the access network device. The cell may be referred to as a serving cell. For example, the terminal may receive a signal of a cell via at least one cell, to determine signal quality of the cell. The terminal determines the serving cell based on the signal quality of the cell. For example, the terminal selects, from the at least one cell, a cell with best cell signal quality as the serving cell.

Random access: For example, the terminal may perform a random access procedure, to establish a connection to the access network device. After the terminal establishes the connection to the access network device, the terminal may perform normal uplink and/or downlink communication with the access network device.

Determining of a transmission resource: For example, a transmission configuration and a transmission resource may be included. In the first mode, the terminal and the access network device may transmit a signaling message of a control plane. For example, the signaling message includes a signaling radio bearer (signaling radio bearer, SRB) 0 message and/or an SRB1 message. The signaling message may carry a non-access stratum (non-access stratum, NAS) message. A radio bearer corresponding to the signaling message may be configured by the access network device for the terminal, predefined, pre-configured, or the like. This is not limited. Further, a transmission resource (which is also referred to as a time-frequency resource) of the signaling message may be configured by the access network device. For example, the access network device configures a corresponding transmission resource for the terminal via a system message. Alternatively, the transmission resource may be predefined, for example, specified in a protocol or specified in a protocol for transmission of the signaling message, or the transmission resource is pre-configured. This is not limited. Because the transmission resource of the signaling message is configured based on the system message, or through predefinition or pre-configuration, or the like, transmission resources corresponding to different terminals may be the same. Consequently, transmission resources of different terminals may conflict.

For example, in the first mode, uplink/downlink data transmission of the terminal may be performed in a resource configuration or dynamic resource scheduling manner. For example, the signaling message is transmitted in the dynamic resource scheduling manner. In a possible implementation, the access network device may configure, for the terminal via a downlink signal, a transmission resource corresponding to the signaling message. Optionally, the downlink signal may be a low power downlink signal (low power downlink signal, LPDS). For example, the access network device indicates, to the terminal, a transmission resource corresponding to the downlink signal. The process may occur in a random access process or after random access is completed. This is not limited. The access network device sends the downlink signal to the terminal on the indicated transmission resource, and the terminal receives the downlink signal from the access network device on the indicated transmission resource. The downlink signal carries indication information of the transmission resource corresponding to the signaling message. Optionally, further, the downlink signal may further carry an indication indicating the terminal to transmit the signaling message on the transmission resource. For example, the downlink signal further carries an indication indicating the terminal to transmit the SRB0 message, the SRB1 message, and the like on the indicated transmission resource. Optionally, the downlink signal may be scrambled based on an identifier of the corresponding terminal. For example, the identifier of the terminal may be a radio network temporary identifier (radio network temporary identifier, RNTI) of the terminal, to avoid a conflict between downlink signals of different terminals. It may be understood that, in the random access process, the access network device may allocate the RNTI to the terminal.

Exchanging of security parameters between the terminal and the core network device and the access network device: For example, a process of exchanging security parameters between the terminal and the core network device includes: The terminal performs procedures such as terminal authentication, obtaining of subscription information, and security negotiation with the core network device, and the core network device establishes the terminal context. Optionally, in the foregoing process, the terminal and the core network device may exchange necessary parameter information via an NAS message. The NAS message is carried in SRB signaling between the terminal and the access network device, and is transparently transmitted by the access network device. A process of exchanging security parameters between the terminal and the access network device includes: The core network triggers a terminal context establishment procedure on an access network side. For example, in the terminal context establishment procedure on the access network side, the terminal and the access network device may exchange the following information: an identifier of the core network, a security parameter, terminal authentication information, or a basic capability (for example, a security capability) of the terminal.

2. The terminal transits from the first mode to the second mode or the third mode.

For example, after completing a related procedure of the first mode, the terminal transits to the second mode by default. Alternatively, after completing a related procedure of the first mode, the terminal may transit to the second mode or the third mode based on the requirement. Alternatively, the access network device may send the fifth indication information to the terminal, and the fifth indication information indicates the terminal to transit from the first mode to the second mode or the third mode. The terminal receives the fifth indication information, and transits from the first mode to the second mode or from the first mode to the third mode based on an indication of the fifth indication information.

3. The terminal transits between the second mode and the third mode.

For example, the terminal transits from the second mode to the third mode or transits from the third mode to the second mode. The terminal may transit from the second mode to the third mode or transit from the third mode to the second mode based on the requirement. Alternatively, the access network device may send the fifth indication information to the terminal, to indicate the terminal to transit to the second mode or the third mode.

In the foregoing descriptions, the terminal triggers a transition from the first mode to the second mode or the third mode, or triggers a transition between the second mode and the third mode. Alternatively, the access network device may trigger the terminal to transit to the second mode or the third mode. The following describes a process in which the terminal triggers a mode transition and a process in which the access network device triggers a mode transition of the terminal.

For example, the process in which the terminal triggers a transition includes the following:
For example, the terminal transits to the second mode or the third requirement based on the requirement. Optionally, the requirement includes the first requirement or the second requirement. In addition, the requirement may further include another requirement, for example, a third requirement. This is not limited. In a possible implementation, the terminal transits to the second mode based on the first requirement. Alternatively, the terminal transits to the third mode based on the second requirement. Optionally, the terminal may determine the first requirement or the second requirement based on a transmission status of the terminal.

For example, the terminal may obtain the transmission status of the terminal. Optionally, the transmission status of the terminal includes at least one of the following: a service type of the terminal, a service data amount of the terminal, QoS corresponding to service data of the terminal, or a transmission parameter of service data of the terminal.

In a possible implementation, the terminal may obtain the service type of the terminal. For example, an upper layer (for example, an application layer) of the terminal may indicate the service type of the terminal to an access stratum (access stratum, AS). When the service type of the terminal is a first type, the terminal transits to the second mode. In this case, the first requirement includes that the service type of the terminal is the first type. For example, the first type may include a small-packet transmission service, a low traffic service, or a periodic service. Alternatively, when the service type of the terminal is a second type, the terminal transits to the third mode. In this case, the second requirement includes that the service type of the terminal is the second type. For example, the second service type may be real-time broadband communication (real-time broadband communication, RTBC), ultra-reliable low-latency communication (ultra-reliable low-latency communication, URLLC), and enhanced mobile broadband (enhanced mobile broadband, eMBB).

Alternatively, the terminal may obtain the service data amount of the terminal. For example, the service data amount of the terminal includes a service data amount cached at the AS of the terminal, or a service data amount indicated by the application layer of the terminal to the AS. When the service data amount of the terminal is less than a first threshold, the terminal transits to the second mode. In this case, the first requirement includes that the service data amount of the terminal is less than the first threshold. Alternatively, when the service data amount of the terminal is greater than or equal to the first threshold, the terminal transits to the third mode. In this case, the second requirement includes that the service data amount of the terminal is greater than or equal to the first threshold. Optionally, the first threshold may be predefined, for example, specified in a protocol, or may be configured by the access network device for the terminal. For example, after the terminal successfully performs random access, the access network device configures the first threshold for the terminal via a cell system message.

Alternatively, the terminal may obtain the QoS corresponding to the service data of the terminal. For example, the QoS corresponding to the service data of the terminal includes at least one of latency of the service data of the terminal, a packet loss rate of the service data of the terminal, or a transmission rate of the service data of the terminal. The latency of the service data of the terminal is used as an example. When the latency of the service data of the terminal is greater than or equal to a second threshold, the terminal transits to the second mode. In this case, the first requirement includes that the latency of the service data of the terminal is greater than or equal to the second threshold. Alternatively, when the latency of the service data of the terminal is less than the second threshold, the terminal transits to the third mode. In this case, the second requirement includes that the latency of the service data of the terminal is less than the second threshold. Optionally, the second threshold may be predefined, for example, defined in a protocol, or configured by the access network device for the terminal. This is not limited.

Alternatively, the terminal may obtain the transmission parameter of the service data of the terminal. For example, the transmission parameter of the service data of the terminal includes at least one of the following: an arrival rate of upper-layer service data of the terminal, a transmission rate of an air interface, bandwidth of the service data, or the latency of the service data. The arrival rate of the upper-layer service data of the terminal is used as an example. When the arrival rate of the upper-layer service data of the terminal is less than a third threshold, the terminal transits to the second mode. In this case, the first requirement includes that the arrival rate of the upper-layer service data of the terminal is less than the third threshold. Alternatively, when the arrival rate of the upper-layer service data of the terminal is greater than or equal to the third threshold, the terminal transits to the third mode. In this case, the second requirement includes that the arrival rate of the upper-layer service data of the terminal is greater than or equal to the third threshold. Optionally, the third threshold is predefined, or is configured by the access network device for the terminal. This is not limited. Alternatively, when the arrival rate of the upper-layer service of the terminal is less than the transmission rate of the air interface of the terminal, the terminal transits to the second mode. In this case, the first requirement includes that the arrival rate of the upper-layer service of the terminal is less than the transmission rate of the air interface of the terminal. Alternatively, when the arrival rate of the upper-layer service of the terminal is greater than or equal to the transmission rate of the air interface of the terminal, the terminal transits to the third mode. In this case, the second requirement includes that the arrival rate of the upper-layer service of the terminal is greater than or equal to the transmission rate of the air interface of the terminal.

Alternatively, in a possible implementation, the terminal may determine the requirement through artificial intelligence (artificial intelligence, AI). For example, a first module is deployed inside or outside the terminal, and the first module is configured to predict the requirement through AI. For example, the first module includes an AI model. For example, when the first module is deployed inside the terminal, the terminal may input the transmission status of the terminal to the first module, and an output of the first module includes the requirement. Alternatively, when the first module is deployed outside the terminal, the terminal may send the transmission status of the terminal to the first module. The transmission status of the terminal is input to the first module, and the output of the first module includes the requirement. It is clear that the requirement output by the first module may be the first requirement or the second requirement. The first module sends third indication information to the terminal, and the third indication information indicates the requirement output by the first module. It may be understood that the requirement output by the first module may be specifically the first requirement or the second requirement. If the requirement, output by the first module, indicated by the third indication information is the first requirement, the terminal transits to the second mode. Alternatively, if the requirement, output by the first module, indicated by the third indication information is the second requirement, the terminal transits to the third mode. It may be understood that, in addition to the requirement, the output of the first module further includes another AI analysis result, for example, a mode configuration corresponding to the terminal in the second mode or the third mode. In a possible implementation, the first module may send all AI analysis results to the terminal.

It may be understood that the terminal serves as a transmit end of uplink data. In the foregoing descriptions, when determining the requirement based on the transmission status of the terminal, the terminal mainly considers a transmission status of the uplink data. Optionally, the terminal serves as a receiver of downlink data. When determining the requirement, the terminal may further consider a receiving status of the downlink data, for example, a packet loss status of the downlink data, or a data amount of the downlink data received in a period of time. In other words, in this example, in addition to the foregoing transmission status of the uplink data of the terminal, the transmission status of the terminal further includes the receiving status of the downlink data of the terminal.

Further, in a scenario in which the terminal triggers a transition of the terminal to the second mode or the third mode, the terminal may notify the access network device to determine to transit to the second mode or the third mode. For example, the terminal sends fourth indication information to the access network device, and the access network device receives the fourth indication information from the terminal. The fourth indication information indicates to transit to the second mode or the third mode. The access network device may determine, based on an indication of the fourth indication information, that the terminal transits to the second mode or the third mode.

Optionally, the access network device determines a configuration of the second mode or the third mode based on the fourth indication information, and sends the configuration to the terminal. Alternatively, the access network device sends an activation indication, to indicate the terminal to activate a configuration of the corresponding second mode or third mode.

In another possible implementation, the fourth indication information includes the configuration, corresponding to the second mode or the third mode, determined by the terminal, and the access network device communicates with the terminal in the second mode or the third mode based on the configuration indicated by the terminal in the fourth indication information.

For example, a process in which the access network device triggers a transition includes the following:
For example, the access network device may determine, based on the requirement, that the terminal transits to the second mode or the third mode. The access network device sends the fifth indication information to the terminal, and the fifth indication information indicates to transit to the second mode or the third mode. The terminal transits to the second mode or the third mode based on the indication of the fifth indication information.

In a possible implementation, the access network device may determine, based on the first requirement, that the terminal transits to the second mode; and the access network device determines, based on the second requirement, that the terminal transits to the third mode.

In a possible implementation, the access network device may determine the transmission status of the terminal. The transmission status of the terminal may be collected by the access network device. For example, the transmission status of the terminal collected by the access network device includes the arrival rate of the service data, the transmission rate of the air interface, the bandwidth of the service data, the latency of the service data, or the QoS of the service data. For example, the arrival rate of the service data may be an arrival rate of uplink service data received by the access network device and/or an arrival rate of downlink service data received by the access network device. The access network device may determine the first requirement or the second requirement based on a collected transmission requirement of the terminal; and trigger, based on the first requirement, the terminal to transit to the second mode; or trigger, based on the second requirement, the terminal to transit to the third mode or the like.

In another possible implementation, the core network device may notify the access network device of the transmission status of the terminal. For example, the core network device sends sixth indication information to the access network device, and the access network device receives the sixth indication information from the core network device. The sixth indication information indicates the transmission status of the terminal. The access network device obtains the transmission status of the terminal based on the sixth indication information. For example, the core network device indicates the transmission status of the terminal to the access network device, that is, the sixth indication information indicates at least one of the following: the service type of the terminal, the service data amount of the terminal, the QoS corresponding to the service data of the terminal, or the transmission parameter (for example, the bandwidth or the latency of the service data) of the service data. Further, the access network device determines the first requirement or the second requirement based on the transmission status of the terminal indicated by the access network device; and trigger, based on the first requirement, the terminal to transit to the second mode; or trigger, based on the second requirement, the terminal to transit to the third mode or the like.

For example, the core network device may indicate the service type of the terminal to the access network device. Optionally, the service type of the terminal indicated by the core network device includes a type, indicated by the core network device, of a downlink service arriving at the access network device. As described above, when the service type of the terminal is the first type, the access network device determines that the terminal transits to the second mode, and the fifth indication information sent by the access network device to the terminal indicates to transit to the second mode. Alternatively, when the service type of the terminal is the second type, the access network device determines that the terminal transits to the third mode, and the fifth indication information sent by the access network device to the terminal indicates to transit to the third mode.

Alternatively, the core network device may indicate the service data amount of the terminal to the access network device. Optionally, the service data amount of the terminal indicated by the core network device includes a downlink service data amount, indicated by the core network device, that is delivered to the terminal within a first time period. As described above, when the service data amount of the terminal is less than the first threshold, the access network device determines that the terminal transits to the second mode. Alternatively, when the service data amount of the terminal is greater than or equal to the first threshold, the access network device determines that the terminal transits to the third mode.

Alternatively, the core network device may indicate, to the access network device, the QoS corresponding to the service data of the terminal. The access network device may determine, based on the QoS corresponding to the service data of the terminal, that the terminal transits to the second mode or the third mode.

Alternatively, the core network device may indicate the transmission parameter of the service data of the terminal to the access network device. For example, the transmission parameter, of the service data, indicated by the core network device may be a transmission bandwidth requirement or a transmission latency requirement of downlink service data. For example, when the transmission bandwidth requirement of the downlink service data is less than a fourth threshold, or the transmission latency requirement of the downlink service data is greater than or equal to a fifth threshold, the access network device may determine that the terminal transits to the second mode. Alternatively, when the transmission bandwidth requirement of the downlink service data is greater than or equal to the fourth threshold, or transmission latency of the downlink service data is less than the fifth threshold, the access network device may determine that the terminal transits to the third mode.

Alternatively, in a possible implementation, the access network device may determine the requirement through AI. For example, the first module is deployed inside or outside the access network device, and the first module is configured to determine the requirement through AI. For example, the first module includes the AI model. For example, when the first module is deployed outside the access network device, the access network device sends the transmission status of the terminal to the first module. The transmission status of the terminal is input to the first module, and the output of the first module includes the requirement. It is clear that the requirement output by the first module may be the first requirement or the second requirement. The first module sends seventh indication information to the access network device, and the access network device receives the seventh indication information from the first module. The seventh indication information indicates the requirement output by the first module. It may be understood that when the requirement indicated by the seventh indication information is the first requirement, the access network device determines that the terminal transits to the second mode. Alternatively, when the requirement indicated by the seventh indication information is the second requirement, the access network device determines that the terminal transits to the third mode. Optionally, the access network device may periodically send the transmission status of the terminal to the first module for model inference, and further perform a mode transition based on a model inference result of the first module, to better meet a data transmission requirement.

It may be understood that information, used for model inference, sent by the access network device to the first module may be the transmission status of the terminal, or other information than the transmission status of the terminal. For example, the information, used for model inference, sent by the access network device to the first module may include at least one of the following: the data amount of the downlink data of the terminal in a period of time, the QoS corresponding to the service data of the terminal, or a transmission status of the downlink data of the terminal, for example, a transmission success rate of the downlink data of the terminal, or a transmission failure rate of the downlink data of the terminal.

It may be understood that the access network device serves as a receive end of the uplink data. When determining the requirement based on the transmission status of the terminal, the access network device may consider both the transmission status, of the downlink data, indicated by the access network device and a status of receiving the uplink data by the access network device, for example, a packet loss status of the uplink data, or a data amount of the uplink data received in a period of time. In other words, in this example, in addition to the foregoing transmission status, of the downlink data, indicated by the core network device, the transmission status of the terminal further includes the receiving status of the uplink data of the access network device.

Optionally, the procedure shown in FIG. 2 further includes: The terminal or the access network device determines a first configuration and/or a second configuration. The first configuration is used by the terminal to communicate with the access network device in the second mode, and the second configuration is used by the terminal to communicate with the access network device in the third mode. "Determining" the first configuration and/or the second configuration may be replaced with "obtaining" the first configuration and/or the second configuration.

In a possible implementation, the terminal or the access network device may determine the first configuration, and the first configuration is used for the second mode. It may be understood that the second mode corresponds to one or more configurations. In a design, the terminal may determine the first configuration from the one or more configurations of the second mode. This process may be described as that the terminal activates the first configuration. The terminal sends first indication information to the access network device, and the access network device receives the first indication information from the terminal. Alternatively, in a design, the access network device may determine the first configuration from the one or more configurations of the second mode. This process may be described as that the access network device activates the first configuration. The access network device sends second indication information to the terminal, and the terminal receives the second indication information from the access network device. The second indication information indicates the first configuration. Alternatively, in a design, the access network device may generate a new configuration, and the configuration is referred to as the first configuration. The access network device sends first configuration information to the terminal, and the terminal receives the first configuration information from the access network device. The first configuration information is used to configure the first configuration. The terminal determines the first configuration based on the first configuration information. In the second mode, the terminal communicates with the access network device based on the first configuration.

Optionally, the one or more configurations corresponding to the second mode may be predefined, or may be configured by the access network device for the terminal. For example, for the second mode, the access network device configures a plurality of configurations for the terminal, and allocates a corresponding identifier to each configuration. Default states of the plurality of configurations configured by the access network device may be inactive states. For example, the access network device activates a configuration. As described above, the access network device may send the second indication information to the terminal, and the second indication information carries an identifier of the activated configuration. When receiving the second indication information, the terminal obtains the identifier, of the configuration, carried in the second indication information, and activates the corresponding configuration. It may be understood that, in the second mode, the access network device may communicate with the terminal via the activated first configuration.

It may be understood that the terminal may request the access network device to configure one or more configurations for the second mode of the terminal. For example, before the terminal transits to the second mode, or when the terminal transits to the second mode, the terminal sends request information to the access network device, to request the access network device to configure the one or more configurations for the second mode of the terminal. Alternatively, the access network device may actively configure the one or more configurations for the second mode of the terminal. For example, when the access network device triggers the terminal to transit to the second mode, the access network device may configure a plurality of configurations corresponding to the second mode for the terminal.

In a possible implementation, the first configuration includes at least one of the following: a first sub-configuration, a second sub-configuration, or a third sub-configuration;
1. The first sub-configuration is used to configure a first signal. For example, the first sub-configuration includes a cycle of the first signal and a frequency domain resource of the first signal, for example, a start frequency domain location of the first signal. The first signal is used by the terminal in the second mode to perform at least one of the following: mobility management, a dynamic transmission resource indication, a mode transition, or the like.

An example in which the first signal is used for the dynamic transmission resource indication is used. The first signal includes a downlink signal and/or an uplink signal, the downlink signal indicates an uplink transmission resource and/or a downlink transmission resource, and the uplink signal is used to request the uplink transmission resource and/or the downlink transmission resource. Optionally, the first signal may be a low power signal, the downlink signal may be a low power downlink signal (low power downlink signal, LPDS), and the uplink signal may be a low power uplink signal (low power uplink signal, LPUS). For example, the access network device sends an LPDS to the terminal, and the LPDS includes an uplink transmission resource and/or a downlink transmission resource. The terminal communicates with the access network device based on the indicated uplink transmission resource and/or downlink transmission resource. Alternatively, the terminal sends an LPUS to the access network device, and the LPUS is used to request an uplink transmission resource and/or a downlink transmission resource from the access network device. When receiving the LPUS, the access network device allocates the uplink transmission resource and/or the downlink transmission resource to the terminal based on the request of the terminal. Further, the access network device sends an LPDS to the terminal, and the LPDS includes the uplink transmission resource and/or the downlink transmission resource allocated by the access network device to the terminal.

Optionally, the first signal, for example, the LPDS or the LPUS, may be scrambled based on the identifier of the terminal, for example, based on the RNTI of the terminal, to avoid a conflict between first signals of different terminals.

2. The second sub-configuration is used to configure a radio bearer, and the second sub-configuration includes at least one of the following: a predefined configuration, a common configuration, or a dedicated configuration.

In a possible implementation, configurations of a plurality of radio bearers may be predefined. The second sub-configuration may include a default radio bearer configuration. The default radio bearer configuration may be a radio bearer configuration that is applied by default in the predefined configurations of the plurality of radio bearers. The common configuration is a radio bearer configuration that is common to a plurality of terminals. For example, the access network device may configure a common/shared radio bearer configuration for a plurality of terminals via a system message. The dedicated configuration is a radio bearer configuration that is applied only to a current terminal. For example, the access network device may configure, for the current terminal, a radio bearer configuration that is used only for the terminal. For example, when the terminal is in the first mode, the access network device may configure a dedicated radio bearer configuration for the terminal. Alternatively, when the terminal exits the third mode last time, the access network device configures a dedicated radio bearer configuration for the terminal.

In a possible implementation, the dedicated configuration may be applied to the SRB0 message, that is, the terminal and the access network device may transmit the SRB0 message via a radio bearer corresponding to the dedicated configuration. The default configuration may be applied to the SRB1 message and an SBR2 message, that is, the terminal and the access network device may transmit the SBR1 message and the SRB2 message via a radio bearer of the default configuration. The common configuration or the dedicated configuration may be applied to a data radio bearer (data radio bearer, DRB) message, that is, the terminal and the access network device may transmit the DRB message via a radio bearer corresponding to the common configuration or the dedicated configuration.

3. The third sub-configuration is used to configure a periodic transmission resource, and the third sub-configuration is a predefined configuration, a common configuration, or a dedicated transmission resource configuration.

For example, the periodic transmission resource configured by the third sub-configuration may be referred to as a configured grant (configured grant, CG) resource. For example, when the terminal is in the first mode, or when the terminal exits the third mode last time, the access network device may configure the CG resource for the terminal.

Optionally, the first configuration further includes a fourth sub-configuration.

4. The fourth sub-configuration is used for mobility management. For example, based on a capability of the access network device, mobility management may be performed based on measurement reporting of the terminal (UE centric), or mobility management of the terminal may be performed based on sensing of the access network device (NW centric).

In a possible implementation, the terminal or the access network device may determine the second configuration, and the second configuration is used for the third mode. It may be understood that the third mode corresponds to one or more configurations. In a design, the terminal may determine the second configuration from the one or more configurations of the third mode. This process may be described as that the terminal activates the second configuration. The terminal sends indication information (for example, the indication information may still be referred to as first indication information or other indication information, which is not limited) to the access network device, and the access network device receives the indication information from the terminal. Alternatively, in a design, the access network device may determine the second configuration from the one or more configurations of the third mode. This process may be described as that the access network device activates the second configuration. The access network device sends indication information (for example, the indication information may still be referred to as second indication information or other indication information, which is not limited) to the terminal, and the terminal receives the indication information from the access network device. The indication information indicates the second configuration. The terminal activates the corresponding configuration based on the indication information. Alternatively, in a design, the access network device may generate a new configuration, and the configuration is referred to as a second configuration. The access network device sends one piece of configuration information (for example, the configuration information may still be referred to as first configuration information or other configuration information) to the terminal. The terminal receives the configuration information from the access network device, and determines the second configuration based on the configuration information. In the third mode, the terminal communicates with the access network device based on the second configuration.

Optionally, the one or more configurations corresponding to the third mode may be predefined, or may be configured by the access network device for the terminal. For example, for the third mode, the access network device configures a plurality of configurations for the terminal, and allocates a corresponding identifier to each configuration. Default states of the plurality of configurations configured by the access network device may be inactive states. For example, the access network device activates a configuration. As described above, the access network device may send indication information to the terminal, and the indication information carries an identifier of the activated configuration. When receiving the indication information, the terminal obtains the identifier, of the configuration, carried in the indication information, and activates the corresponding configuration. It may be understood that, in the third mode, the terminal communicates with the access network device via the activated second configuration.

It may be understood that the terminal may request the access network device to configure one or more configurations for the third mode of the terminal. For example, before the terminal transits to the third mode, or when the terminal transits to the third mode, the terminal sends request information to the access network device, to request the access network device to configure the one or more configurations for the third mode of the terminal. Alternatively, the access network device may actively configure the one or more configurations for the third mode of the terminal. For example, when the access network device triggers the terminal to transit to the third mode, the access network device may configure a plurality of configurations corresponding to the third mode for the terminal.

Optionally, the second configuration includes a dedicated configuration. For example, the dedicated configuration is a configuration that is applied only to the current terminal. For example, the access network device may determine the second configuration based on a QoS requirement of the terminal. The second configuration includes at least one of the following:
1. a radio bearer configuration, where for example, the access network device configures, for the terminal, radio bearers corresponding to an SRB1, an SRB2, and a DRB; and optionally, the radio bearer includes a packet data convergence protocol (packet data convergence protocol, PDCP) layer configuration and an associated radio link control (radio link control, RLC) layer bearer configuration;
2. a measurement configuration, where for example, the measurement configuration is used by the terminal to perform mobility management measurement and reporting; or
3. a transmission resource configuration, where for example, the transmission resource configuration includes a CG transmission resource.

Based on the foregoing design, different modes are designed for the terminal in this embodiment based on different phases and transmission requirements of the terminal. For example, when a data transmission requirement of the terminal is not high, for example, a performance requirement is not high, or an amount of transmitted data is small, the terminal transits to the second mode. In the second mode, the terminal obtains a transmission resource based on a pre-configured periodic resource or a low power signal, and performs uplink/downlink data transmission, to implement energy saving for the terminal during data transmission. When a data transmission requirement of the terminal improves, the terminal may enter the third mode configured based on the access network device, to improve data transmission performance. Based on the design of the foregoing configuration mode, the terminal can avoid overhead caused by RRC state transitions, and can save energy based on the data transmission requirement.

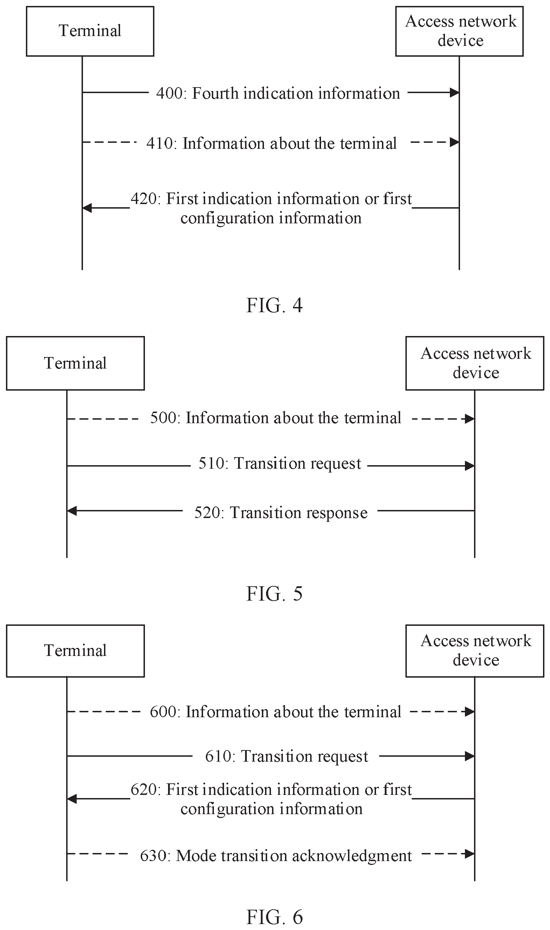

For the terminal triggering a transition, embodiments of this application provide procedures in FIG. 4 to FIG. 6. The procedures in FIG. 4 to FIG. 6 may be used as possible implementations in which the terminal triggers a transition.

As shown in FIG. 4, a schematic flowchart is provided, including the following steps:
Step 400: A terminal sends fourth indication information to an access network device, and the access network device receives the fourth indication information from the terminal.

The fourth indication information indicates to transit to a second mode or a third mode. In a possible implementation, the fourth indication information may be represented by 1 bit. For example, when the 1 bit corresponds to data "1", it indicates to transit to the second mode; or when the 1 bit corresponds to data "0", it indicates to transit to the third mode; or vice versa. This is not limited.

In a possible implementation, the fourth indication information may be carried in an LPUS message or an RRC message. For example, the terminal may send the LPUS message to the access network device on a configured LPUS resource, and the LPUS message carries the fourth indication information. Alternatively, the terminal may send the RRC message to the access network device on a pre-configured CG resource, and the RRC message carries the fourth indication information. Alternatively, the terminal may send an LPUS signal to the access network device on a configured LPUS resource, and the LPUS signal is used to request an uplink transmission resource. The access network device sends an LPDS signal to the terminal based on the request of the terminal, and the LPDS signal includes an uplink transmission resource allocated by the access network device to the terminal. The terminal sends the RRC message to the access network device on the uplink transmission resource allocated by the access network device, and the RRC message carries the fourth indication information.

Optionally, step 410: The terminal sends information about the terminal to the access network device, and the access network device receives the information from the terminal.

For example, the terminal reports the information about the terminal to the access network device side, so that the access network device determines a first configuration and/or a second configuration. For example, the information about the terminal reported by the terminal includes at least one of the following: a transmission status of the terminal, a requirement determined by the terminal (for example, a first requirement or a second requirement determined by the terminal), or an analysis result corresponding to AI. For example, the analysis result corresponding to AI includes a proper configuration corresponding to the terminal in the second mode or the third mode.

In a possible implementation, the information in step 400 and step 410 may be carried in one message and reported to the access network device, or may be carried in different messages and separately reported to the access network device. This is not limited.

Step 420: The access network device sends first indication information or first configuration information to the terminal, and the terminal receives the first indication information or the first configuration information from the access network device.

For example, when the access network device receives fourth indication information, the access network device may determine, based on an indication of the fourth indication information, that the terminal transits to the second mode or the third mode. In a scenario in which the terminal transits to the second mode, the access network device may determine whether current configurations of the second mode include a configuration that matches a current status of the terminal. For example, the access network device determines, based on the information about the terminal reported by the terminal in step 410, whether the current configurations of the second mode include the configuration that matches the current status of the terminal. If there is a matched configuration, the access network device sends the first indication information to the terminal, and the first indication information carries an identifier of the matched configuration. In the foregoing descriptions, a configuration that matches the second mode is referred to as the first configuration. In a scenario in which the terminal transits to the third mode, the access network device may determine whether current configurations of the third mode include a configuration that matches a current status of the terminal. For example, the access network device may determine, based on the information about the terminal reported by the terminal in step 410, whether the configurations of the third mode include the configuration that matches the current status of the terminal. If there is a matched configuration, the access network device sends the first indication information to the terminal, and the first indication information carries an identifier of the matched configuration. In the foregoing descriptions, a corresponding configuration that matches the third mode is referred to as the second configuration. Optionally, the first indication information may be carried in an LPDS message or an RRC message. Further, the access network device may send the LPDS message or the RRC message to the terminal on a pre-configured CG resource or a dedicated resource.

Alternatively, in the scenario in which the terminal transits to the second mode or the third mode, there is no configuration that matches the current configuration. The access network device may generate a new configuration. For example, the access network device may generate a new configuration based on the information about the terminal reported by the terminal in step 410. The access network device may send the first configuration information to the terminal, and the first configuration is used to configure the new configuration for the terminal. For example, if the terminal has the pre-configured CG resource, the access network device may send the RRC message to the terminal on the pre-configured CG resource. The RRC message carries the first configuration information. Alternatively, if there is no pre-configured CG resource on the terminal side, or the access network device does not use the pre-configured CG resource to carry the first configuration information, the access network device may send an LPDS to the terminal. The LPDS indicates a downlink transmission resource. The access network device sends the RRC message to the terminal on the downlink transmission resource indicated by the LPDS, and the RRC message carries the first configuration.

As shown in FIG. 5, an embodiment of this application further provides a schematic flowchart. A difference from FIG. 4 lies in that although a terminal triggers a mode transition, a base station determines a final transition. As shown in FIG. 5, the following steps are included:
Step 500: The terminal reports information about the terminal to an access network device, and the access network device receives the information from the terminal.

For the process, refer to the descriptions in step 410. Details are not described again. Step 500 is optional. Step 500 may be performed, or step 500 may not be performed. This is not limited.

Step 510: The terminal sends a transition request to the access network device, and the access network device receives the transition request from the terminal.

For example, the transition request includes fourth indication information, and the transition request is used to request the terminal to transit to a second mode or a third mode. When receiving the transition request, the access network device sends a transition response to the terminal, as shown in step 520. Optionally, the transition request may be carried in an LPUS message or an RRC message.

Step 520: The access network device sends the transition response to the terminal, and the terminal receives the transition response from the access network device.

For example, the transition response may indicate that the access network device acknowledges the transition request of the terminal, or the transition response indicates that the access network device does not acknowledge or rejects the transition request of the terminal. This is not limited. An implementation process of whether the access network device acknowledges the transition request of the terminal is not limited. For example, in a possible implementation, the access network device may determine, based on the information about the terminal reported by the terminal in step 500, whether to acknowledge the transition request of the terminal. Optionally, the transition response may be carried in an LPDS message or an RRC message.

It may be understood that when the transition response indicates that the access network device acknowledges a transition, the terminal transits to the second mode or the third mode. Alternatively, when the transition response indicates that the access network device does not acknowledge the transition, the terminal no longer performs a mode transition.

In a possible implementation, the second mode or the third mode may correspond to a plurality of configurations. For example, in step 510, when the terminal requests to transit to the second mode or the third mode, the terminal may determine to activate a configuration corresponding to the second mode or the third mode, and the transition request sent to the access network device in step 510 carries an identifier of the activated configuration. When receiving the transition request of the terminal, the access network device may determine whether to acknowledge the transition request of the terminal, and whether to acknowledge the configuration activated by the terminal. If both the transition request of the terminal and the configuration activated by the terminal are acknowledged, the access network device sends a transition acknowledgment response to the terminal. If either the transition request of the terminal or the configuration activated by the terminal is not acknowledged, the access network device sends a transition reject response to the terminal. Further, the access network device may carry a reason for rejecting the transition in the transition response. For example, the reason may be: rejecting the transition request of the terminal, or rejecting the configuration activated by the terminal. Alternatively, the second mode or the third mode may correspond to one configuration. In this case, the identifier of the activated configuration may no longer be carried in step 510. When the terminal transits to the second mode or the third mode, the terminal definitely uses the configuration corresponding to the second mode or the third mode to communicate with the access network device.

As shown in FIG. 6, an embodiment of this application further provides a schematic flowchart. A difference between the schematic flowchart and FIG. 5 lies in that a terminal initiates a mode transition request, but an access network device determines a final configuration. As shown in FIG. 6, the following steps are included:

Step 600: The terminal sends information about the terminal to the access network device, and the access network device receives the information from the terminal.

Step 600 is optional.

Step 610: The terminal sends a transition request to the access network device, and the access network device receives the transition request from the terminal.

For example, the transition request includes fourth indication information, and the terminal may request to transit to a second mode or a third mode. Optionally, the transition request may be carried in an LPUS message or an RRC message.

Step 620: The access network device sends first indication information or first configuration information to the terminal, and the terminal receives the first indication information or the first configuration information from the access network device.

For example, the access network device may determine whether there is a proper or matched configuration in the second mode or the third mode to which the terminal requests to transit. If there is a proper or matched configuration, the access network device sends the first indication information to the terminal. The first indication information indicates a configuration in the second mode or the third mode. The first indication information may carry an identifier of an activated configuration in the second mode or the third mode. Alternatively, if there is no proper or matched configuration in the second mode or the third mode, the access network device may generate a new configuration, and send the first configuration information to the terminal. The first configuration information is used to configure the new configuration. Optionally, the first indication information may be carried in an LPDS message or an RRC message. The first configuration information may be carried in the RRC message.

Step 630: The terminal sends mode transition acknowledgment to the access network device, and the access network device receives the mode transition acknowledgment from the terminal.

For example, when receiving the first indication information or the first configuration information in step 620, the terminal may send the mode transition acknowledgment to the access network device. Optionally, the mode transition acknowledgment may be carried in an LPUS message or an RRC message. Step 630 is optional. In the procedure in FIG. 6, step 630 may be performed, or step 630 may not be performed. This is not limited.

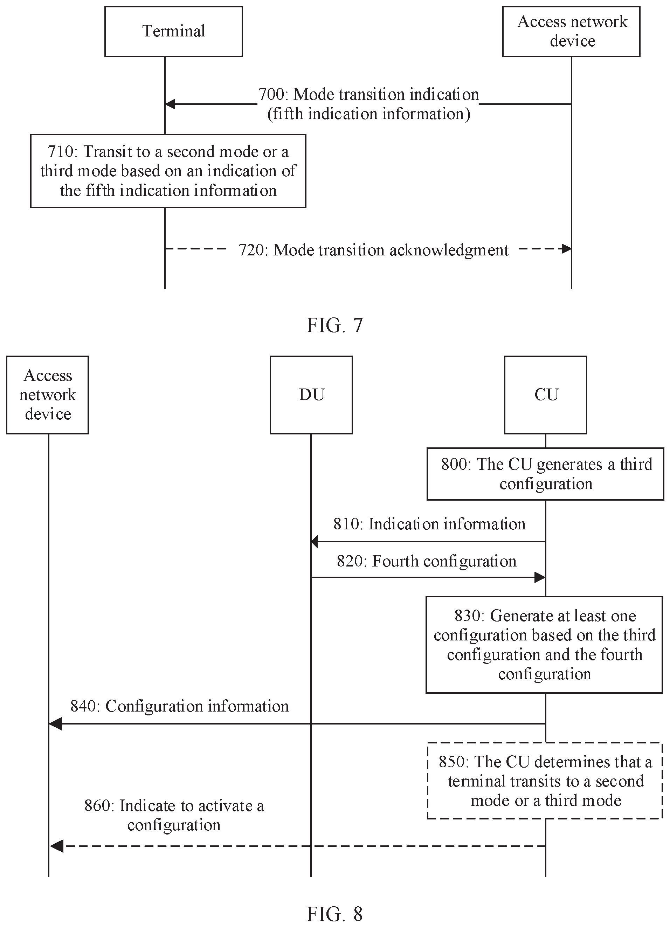

For the access network device triggering transition, an embodiment of this application provides a procedure in FIG. 7. The procedure in FIG. 7 may be used as a possible implementation in which the access network device triggers a transition.

As shown in FIG. 7, an embodiment of this application further provides a schematic flowchart, including the following steps:
Step 700: An access network device sends a mode transition indication to a terminal, and the terminal receives the mode transition indication from the access network device.

For example, the mode transition indication includes fifth indication information, indicating the terminal to transit to a second mode or a third mode. In a possible implementation, the access network device may generate a configuration corresponding to the second mode or the third mode to which the terminal transits, and include a corresponding configuration in the mode transition indication. For example, the mode transition indication carries first configuration information, and the first configuration information is used to configure a new configuration generated by the access network device for the second mode or the third mode to which the terminal transits. Alternatively, in another possible implementation, the access device may preconfigure a plurality of configurations for the second mode or the third mode of the terminal. The terminal may select or activate one configuration from the plurality of configurations. The mode transition indication in step 700 carries an identifier of the selected or activated configuration. Optionally, the mode transition indication may be carried in an RRC message or an LPDS message. It may be understood that, if the second mode or the third mode corresponds to one configuration, the mode transition indication may carry only the fifth indication information, and does not carry the identifier of the activated configuration.

Step 710: The terminal transits to the second mode or the third mode based on an indication of the fifth indication information.

Step 720: The terminal sends mode transition acknowledgment to the access network device, and the access network device receives the mode transition acknowledgment from the terminal.

Optionally, the mode transition acknowledgment may be carried in an RRC message or an LPUS message. Step 720 is optional. In the procedure in FIG. 7, step 720 may be performed, or step 720 may not be performed. This is not limited.

Optionally, in this embodiment of this application, the terminal may support one RRC state, which is also referred to as a single RRC state (single RRC state). In the RRC state, the terminal supports a plurality of modes. For example, in the RRC state, the terminal supports a first mode, the second mode, and the third mode. Because the terminal does not involve RRC state transitions during mode transition, latency and overhead of RRC transitions of the terminal can be reduced.

Based on the foregoing design, after completing an initial access procedure, the terminal may transit between the second mode and the third mode based on a transition condition and a transition procedure. The transition condition can ensure that the terminal and the access network device can monitor a current service data transmission requirement of the terminal in real time. The transition procedure implements fast mode transitions based on different service data transmission requirements, so that the terminal can flexibly implement energy saving while meeting the service transmission requirements.

### [Embodiment 2]

In the foregoing descriptions, the access network device may configure at least one configuration for the second mode/third mode of the terminal. Alternatively, when the access network device does not have a proper or matching configuration in the current configurations, the access network device may generate a new configuration, and configure the new configuration for the terminal via the first configuration information. Optionally, the access network device may use a split architecture. For example, the access network device includes a first unit and a second unit. In this embodiment of this application, names of the first unit and the second unit are not limited. For example, the first unit may be referred to as a CU, and the second unit may be referred to as a DU. In the following descriptions, the CU and the DU are used as an example for description. When the access network device uses the CU-DU split architecture, a process in which the access network device generates a configuration includes: The CU generates a third configuration. The third configuration is a configuration corresponding to the CU, for example, the third configuration may include a PDCP configuration of a radio bearer. The DU generates a fourth configuration, and sends the fourth configuration to the CU. The fourth configuration is a configuration corresponding to the DU, for example, the fourth configuration may include an RLC configuration of the radio bearer. The CU generates a configuration based on the third configuration and the fourth configuration. For example, the configuration may be the first configuration or the second configuration, or may be a configuration other than the first configuration or the second configuration. This is not limited.

Optionally, in this embodiment of this application, the access network device may use the CU-DU split architecture. The CU and the DU may be understood as division of the access network device from a perspective of logical functions. The CU and the DU may be physically separated or deployed together. This is not limited. A plurality of DUs may be connected to (share) one CU, and one DU may alternatively be connected to a plurality of CUs. A plurality of CUs may be physically disposed in a central manner, or disposed separately. The CU and the DU may be connected through an interface. For example, the interface may be an F1 interface. The CU and the DU may be divided based on a protocol layer of a wireless network. For example, a PDCP layer and a protocol layer above the PDCP layer are set in the CU. For example, the CU is configured to perform functions of a radio resource control (radio resource control, RRC) layer, a service data adaptation protocol (service data adaptation protocol, SDAP) layer, and the PDCP layer. A protocol layer below the PDCP layer is set in the DU. For example, the DU is configured to perform functions of an RLC layer, a media access control (media access control, MAC) layer, and a physical (physical) layer.

The division into processing functions of the CU and the DU based on protocol layers is merely an example, and may alternatively be division in another manner. For example, the CU or the DU may have functions of more protocol layers through division. For another example, the CU or the DU may have some processing functions of protocol layers through division. For example, some of functions of the RLC layer and a function of a protocol layer above the RLC layer are set in the CU, and remaining functions of the RLC layer and a function of a protocol layer below the RLC layer are set in the DU. For another example, division into functions of the CU or the DU may alternatively be performed based on service types or other system requirements. For example, division may be performed based on latencies. Functions whose processing time needs to meet a latency requirement are set in the DU, and functions whose processing time does not need to meet the latency requirement are set in the CU. Alternatively, the CU may have one or more functions of the core network. For example, the CUs may be disposed on a network side for ease of central management. The DU may have a plurality of radio frequency functions. For example, the radio frequency functions of the DU are set remotely.

Further, the CU may be split into a CU-CP and a CU-UP. For example, functions of the CU are further split. For example, a control plane (control plane, CP) and a user plane (user plane, UP) are split, that is, a CU-control plane (CU-CP) and a CU-user plane (CU-UP). Optionally, the CU-CP and the CU-UP are implemented by using different entities, and are connected through an E1 interface. The CU-CP and the CU-UP may be coupled to the DU, to jointly complete functions of the access network device. An interface between the CU-CP and the DU may be F1-C, and an interface between the CU-UP and the DU may be F1-D.

In a possible implementation, the access network device may generate at least one configuration corresponding to the second mode, and the access network device may configure the at least one configuration for the terminal. The access network device may generate at least one configuration corresponding to the third mode, and the access network device configures the at least one configuration for the terminal. When the access network device determines that the terminal needs to perform a mode transition, the access network device may send the fifth indication information to the terminal, and the fifth indication information indicates the terminal to transit to the second mode or the third mode. In a scenario in which the terminal is indicated to transit to the second mode, the access network device may activate one configuration in the at least one configuration corresponding to the second mode, where the configuration is referred to as the first configuration above; and send indication information (for example, the first indication information) to the terminal, to indicate to activate the first configuration. The terminal in the second mode communicates with the access network device via the first configuration. Alternatively, in a scenario in which the terminal is indicated to transit to the third mode, the access network device may activate one configuration in the at least one configuration corresponding to the third mode, where the configuration is referred to as the second configuration above; and send indication information to the terminal, to activate the second configuration. The terminal in the third mode communicates with the access network device via the second configuration.

An example in which the access network device uses the CU-DU split architecture is used. As shown in FIG. 8, an embodiment of this application provides a schematic flowchart, including the following steps.

Step 800: A CU generates a third configuration.

For example, the CU may determine an air interface resource configuration of a terminal based on an air interface transmission status of the terminal. In other words, the third configuration may be the air interface resource configuration. For example, the CU may determine the air interface resource configuration of the terminal based on a data transmission variation of the terminal, or prediction based on an AI module. Optionally, the air interface resource configuration of the terminal includes a radio bearer configuration of the terminal.

Step 810: The CU sends indication information to a DU, and the DU receives the indication information from the CU, where the indication information indicates the DU to provide a fourth configuration.

Step 820: The DU sends the fourth configuration to the CU, and the CU receives the fourth configuration from the DU.

It may be understood that the third configuration one-to-one corresponds to the fourth configuration. The indication information in step 810 may include a requirement, for example, a QoS requirement, that the radio bearer configuration in the third configuration needs to meet. Optionally, the indication information in step 810 may further include an identifier corresponding to the third configuration. Alternatively, the CU may not indicate the identifier of the third configuration to the DU, and the CU identifies a corresponding configuration through configurations in sequence.

Step 830: The CU generates at least one configuration based on the third configuration and the fourth configuration.

Optionally, the third configuration may be referred to as a higher-layer configuration. For example, the third configuration may be a configuration corresponding to a PDCP layer and a protocol layer above the PDCP layer. The fourth configuration may be referred to as a lower-layer configuration. For example, the fourth configuration may be a configuration corresponding to a protocol layer below the PDCP layer.

Step 840: The CU sends configuration information to the terminal via the DU, and the terminal receives the configuration information from the CU via the DU, where the configuration information is used to configure the at least one configuration for the terminal.

It may be understood that the at least one configuration includes at least one configuration corresponding to a second mode and/or at least one configuration corresponding to a third mode. In other words, in this embodiment of this application, the CU may generate the at least one configuration corresponding to the second mode, and configure the at least one configuration corresponding to the second mode for the terminal in step 840; and/or the CU may generate the at least one configuration corresponding to the third mode, and configure the at least one configuration corresponding to the third mode for the terminal in step 840.

In step 840, the DU may transparently transmit the configuration information.

Optionally, step 850: The CU determines that the terminal transits to the second mode or the third mode.

For example, the CU determines that the terminal transits to the second mode. In this case, the CU may select or activate one configuration from the at least one configuration corresponding to the second mode, and indicate the selected or activated configuration to the terminal in step 860. Alternatively, the CU determines to transit to the third mode. In this case, the CU may select or activate one configuration from the at least one configuration corresponding to the third mode, and indicate the selected or activated configuration to the terminal in step 860.

Optionally, step 860: The CU sends indication information to the terminal, and the terminal receives the indication information from the CU, where the indication information indicates to activate a configuration.

For example, the CU may send the indication information to the DU, and the DU may transparently transmit the indication information, to forward the indication information to the terminal. The indication information carries an identifier of the activated configuration, for example, a sequential number of the activated configuration. Optionally, the indication information may be carried in an RRC message. Alternatively, the CU sends the indication information to the DU, and the indication information carries the identifier of the activated configuration. When receiving the indication information, the DU indicates the terminal to activate the corresponding configuration. Optionally, the indication information may be carried in an LPDS message.

In another possible implementation, concepts of the "second mode" and the "third mode" may be canceled. For example, the access network device may generate at least one configuration, and configure the at least one configuration for the terminal. When determining that a configuration transition needs to be performed, the access network device may activate one of the at least one configuration, and the terminal communicates with the access network device via the activated configuration. For example, the access network device generates five configurations, and configures the five configurations for the terminal. It may be understood that the five configurations are in an inactive state by default. When determining to transit from one configuration to another configuration, the access network device may send a transition indication to the terminal, and the transition indication carries an identifier of the another configuration. When receiving the transition indication, the terminal transits from the current configuration to the another configuration, and the terminal communicates with the access network device via the another configuration. It may be understood that, when the possible implementation is applied to the CU-DU split architecture of the access network device, a difference from the foregoing procedure in FIG. 8 is as follows: In step 850, "the CU determines that the terminal transits to the second mode or the third mode" may be replaced with "the CU determines that the terminal transits from one configuration to another configuration".

Based on the foregoing design, when the access network device uses the CU-DU split architecture, the CU and the DU in the access network device may interact with each other, and the solutions in embodiments of this application can be implemented in an open RAN architecture.

### [Embodiment 3]

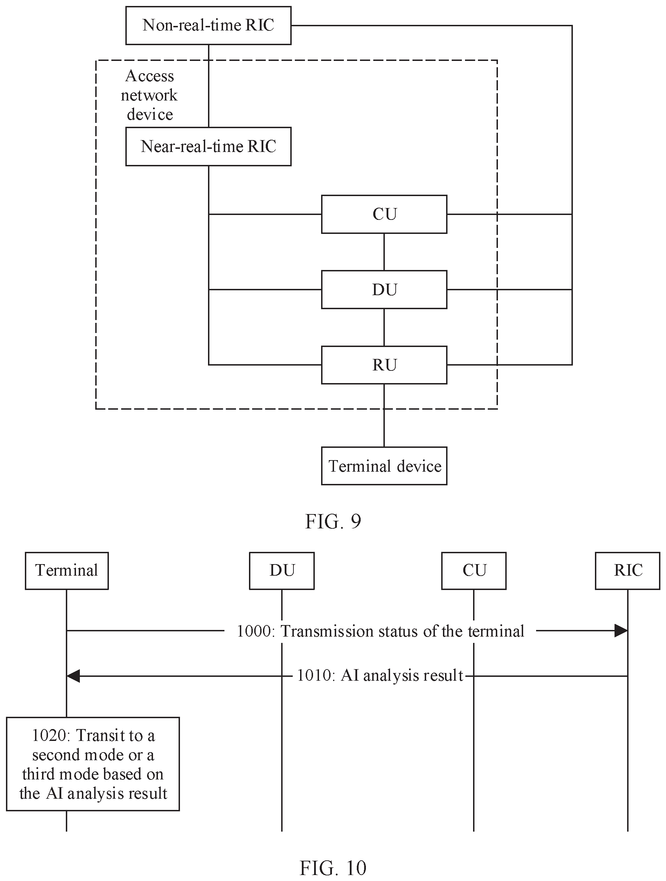

As shown in FIG. 9, the access network device includes a near-real-time access network intelligent controller (RAN intelligent controller, RIC) module, configured to perform model training and inference. For example, the near-real-time RIC may be configured to train an AI model, and use the AI model for inference. For example, the near-real-time RIC may obtain information on a network side and/or a terminal side from at least one of a CU, a DU, or an RU, and the information may be used as training data or inference data.

Optionally, a non-real-time RIC is included outside the access network device. For example, the non-real-time RIC may be located in operations, administration and maintenance (operations, administration and maintenance, OAM), a cloud server, a core network device, or another network device. The non-real-time RIC is configured to perform model training and inference. For example, the non-real-time RIC is configured to train an AI model and use the model for inference. For example, the non-real-time RIC may obtain information on the network side and/or the terminal side from at least one of the CU, the DU, or the RU, and the information may be used as training data or inference data. An inference result may be submitted to at least one of the CU, the DU, the RU, or the terminal.

FIG. 10 is a schematic flowchart according to an embodiment of this application, and includes the following steps:
Step 1000: A terminal sends a transmission status of the terminal to an RIC, and the RIC receives the transmission status of the terminal from the terminal.

For example, the terminal may send the transmission status of the terminal to the RIC through transparent transmission between a CU and a DU. Optionally, the RIC may be a near-real-time RIC, a non-real-time RIC, or the like. This is not limited.

In a possible implementation, the transmission status of the terminal sent by the terminal to the RIC includes at least one of the following: an amount of transmitted data of the terminal, a data type of the terminal, QoS of terminal data, a current configuration of the terminal, a packet loss status of the terminal, or the like. When receiving the transmission status of the terminal, the RIC may input the transmission status of the terminal into an AI model, and an output of the AI model includes an AI analysis result. For example, the AI analysis result includes a requirement, a recommended configuration of the terminal, or a transition indication. For example, the requirement may be the foregoing requirement. If the requirement is the first requirement, the terminal may transit to a second mode based on the first requirement. Alternatively, if the requirement is the second requirement, the terminal may transit to a third mode based on the second requirement. Alternatively, the output of the AI model may be the transition indication. For example, the transition indication may indicate to transit to the second mode or the third mode. In a scenario in which the terminal triggers a transition, the terminal may transit to the second mode or the third mode based on the transition indication output by the AI model. In a scenario in which an access network device triggers a transition, the access network device may send fifth indication information to the terminal based on the transition indication output by the AI model. The fifth indication information indicates the terminal to transit to the second mode or the third mode. For example, the recommended configuration of the terminal may be a proper configuration or a configuration matching a status of the terminal in the foregoing configuration activation scenario.

Step 1010: The RIC sends the AI analysis result to the terminal, and the terminal receives the AI analysis result from the RIC.

For example, the RIC may transparently transmit the AI analysis result to the terminal via the CU and the DU.

Step 1020: The terminal transits to the second mode or the third mode based on the AI analysis result.

For example, the AI analysis result includes the requirement. When the requirement is the first requirement, the terminal transits to the second mode. Alternatively, when the requirement is the second requirement, the terminal transits to the third mode. Alternatively, the AI analysis result includes the transition indication. In this case, the terminal transits to the second mode or the third mode based on the transition indication. It is clear that the AI analysis result may also include other information, for example, the recommended configuration of the terminal. In the procedure in FIG. 10, a process of mode transitions of the terminal is mainly described, and other processes are not described.

Based on the foregoing design, when the access network device uses a CU-DU split architecture, the terminal may interact with the RIC, and the terminal may transit to the second mode or the third mode based on the AI analysis result output by the RIC.

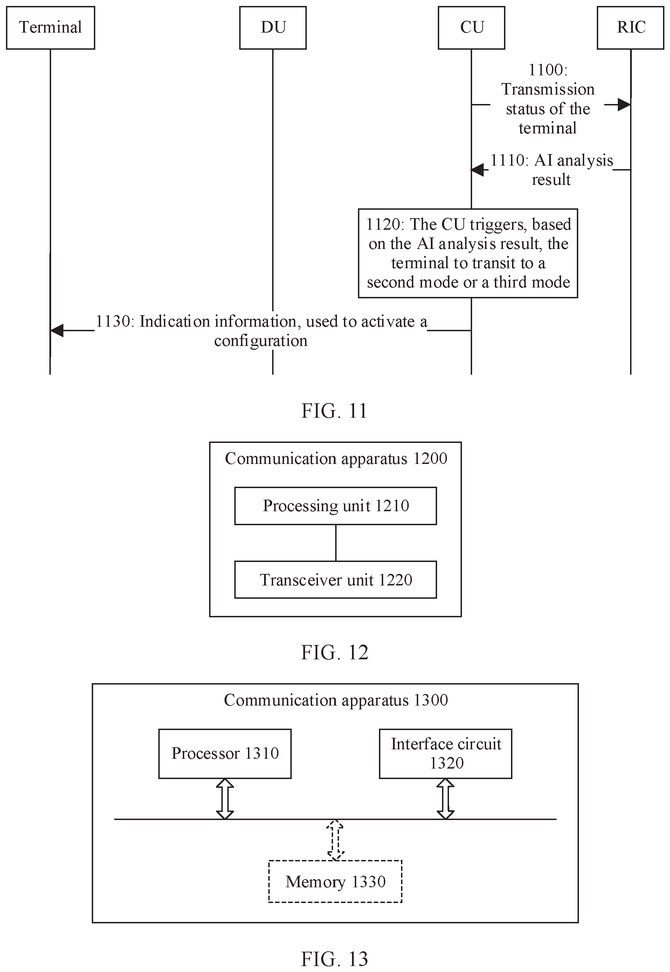

As shown in FIG. 11, an embodiment of this application further provides a schematic flowchart. A difference from FIG. 10 lies in that an RIC sends an AI analysis result to a CU in an access network device, and the CU triggers, based on the AI analysis result, a terminal to perform a mode transition. As shown in FIG. 11, the following steps are included:
Step 1100: The CU sends a transmission status of the terminal to the RIC, and the RIC receives the transmission status of the terminal from the terminal.

For example, the CU may obtain the transmission status of the terminal. For example, the terminal may report the transmission status of the terminal to the CU, and the CU may obtain the transmission status of the terminal based on the report of the terminal. When receiving the transmission status of the terminal, the RIC may input the transmission status of the terminal into an AI model, and an output of the AI model includes the AI analysis result.

Step 1110: The RIC sends the AI analysis result to the CU, and the CU receives the AI analysis result from the RIC.

In a possible implementation, in an architecture in which a CU-CP and a CU-UP are split, in step 1100, the CU-UP may send the transmission status of the terminal to the CU-CP. The CU-CP sends the transmission status of the terminal to the RIC. In step 1110, the RIC indicates the AI analysis result to the CU-CP. In step 1120, the CU-CP triggers, based on the AI analysis result, the terminal to transit to a second mode or a third mode.

Step 1120: The CU triggers, based on the AI analysis result, the terminal to transit to the second mode or the third mode.

For example, the AI analysis result includes a requirement. When the requirement includes a first requirement, the CU triggers the terminal to transit to the second mode. Alternatively, when the requirement includes a second requirement, the CU triggers the terminal to transit to the third mode. Alternatively, when the AI analysis result includes a transition indication, the CU triggers, based on the transition indication, the terminal to transit to the second mode or the third mode.

Further, the AI analysis result may further include a transmission requirement of a radio bearer. The CU may determine, based on the transmission requirement of the radio bearer that is fed back in the AI analysis result, whether there is a proper configuration in current configurations of the second mode or the third mode. If there is a proper configuration, the CU sends indication information to the terminal via the DU, and the indication information indicates to activate the proper configuration. The process is mainly described in step 1130. If there is no proper configuration, the CU may generate a corresponding configuration, and request the DU to generate a corresponding lower-layer configuration. The CU generates a new configuration based on a configuration corresponding to the CU and a configuration corresponding to the DU, and configures the new configuration for the terminal.

Step 1130: The CU sends the indication information to the terminal via the DU, and the terminal receives the indication information from the CU via the DU, where the indication information indicates to activate one configuration in the second mode or the third mode.

Based on the foregoing design, when the access network device uses a CU-DU split architecture, the CU in the access network device may interact with the RIC, and the CU may trigger, based on the AI analysis result output by the RIC, the terminal to transit to the second mode or the third mode.

In embodiments of this application, the following may be understood:
1. The description focuses on differences between different procedures, and descriptions of different procedures may refer to one another. In addition, the foregoing different embodiments may be implemented or applied in combination, or separately implemented or applied. This is not limited.
2. In each procedure, a sequence of different steps is not limited. In addition, each procedure may include fewer steps or more steps than the schematic flowchart or the text descriptions.
3. In the procedures in FIG. 2 to FIG. 11, an example in which the terminal, the access network device, and the like are execution bodies is mainly used for description. It may be understood that, in each procedure, functions of the terminal may be implemented by the terminal, or may be implemented by a module (for example, a chip or a circuit) in the terminal. Functions of the access network device may be implemented by the access network device, or may be implemented by a module (for example, a chip or a circuit) in the access network device, or may be implemented by a logic node, a logic module, or software that can implement all or some of the functions of the access network device.
4. In embodiments of this application, "(for example, the terminal) receiving information from (for example, the access network device)" may be understood as that a source end of the information is the access network device, and a destination end of the information is the terminal, and may include that the terminal directly or indirectly receives the information from the access network device. Necessary processing, for example, a format change, may be performed on the information when the information is sent between the source end and the destination end, but the destination end can understand valid information from the source end. Similar descriptions in this application may be understood similarly. Details are not described herein again.

The foregoing embodiments of this application describe the method provided in embodiments of this application from a perspective of interaction between the terminal and the access network device. To implement functions in the method provided in embodiments of this application, the terminal, the access network device, or the like may include a hardware structure and/or a software module, to implement the foregoing functions in a form of a hardware structure, a software module, or a combination of the hardware structure and the software module. Whether a function in the foregoing functions is performed in a manner of a hardware structure, a software module, or a hardware structure and a software module depends on specific applications and design constraints of the technical solutions.

FIG. 12 and FIG. 13 are diagrams of structures of possible communication apparatuses according to embodiments of this application. These communication apparatuses may implement one or more corresponding functions in the foregoing method embodiments, for example, a function implemented by the access network device or the terminal. Therefore, beneficial effect of the foregoing method embodiments may be achieved. In this embodiment of this application, the communication apparatus may be the terminal or the access network device shown in FIG. 1, or a module (for example, a chip or a circuit) used in the terminal or the access network device.

As shown in FIG. 12, a communication apparatus 1200 includes a processing unit 1210 and a transceiver unit 1220. The communication apparatus 1200 is configured to implement functions of the terminal or the access network device in the method embodiment shown in any one of FIG. 2 to FIG. 11.

Optionally, the transceiver unit 1220 may also be referred to as an output unit, an interface unit, a communication unit, or the like. In a possible implementation, the transceiver unit 1220 includes at least one of a sending unit or a receiving unit. The sending unit and the receiving unit may be integrated together, or may be two independent units, or the like.

When the communication apparatus 1200 is configured to implement the functions of the terminal in FIG. 2 to FIG. 11, specifically, the processing unit 1210 is configured to enter a first mode, where the first mode is used to perform a first procedure, and the first procedure is used to establish a terminal context on a core network side and/or a terminal context on an access network side. The processing unit 1210 is further configured to transit to a second mode or a third mode, where the second mode or the third mode is used for communication between the terminal and a network, the second mode corresponds to a first requirement of the terminal, the third mode corresponds to a second requirement of the terminal, and the first requirement or the second requirement includes a requirement for transmission between the terminal and the network.

In a possible design, the processing unit 1210 is further configured to determine a first configuration and/or a second configuration, where the first configuration is used by the terminal to communicate with the access network device in the second mode, and the second configuration is used by the terminal to communicate with the access network device in the third mode.

In a possible design, when determining the first configuration and/or the second configuration, the processing unit 1210 activates the first configuration and/or the second configuration, and controls the transceiver unit 1220 to send first indication information to the access network device, where the first indication information indicates the first configuration and/or the second configuration; or controls the transceiver unit 1220 to receive second indication information from the access network device, where the second indication information indicates the first configuration and/or the second configuration; or controls the transceiver unit 1220 to receive first configuration information from the access network device, where the first configuration information is used to configure the first configuration and/or the second configuration.

In a possible design, the first configuration includes at least one of the following: a first sub-configuration, a second sub-configuration, or a third sub-configuration. The first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

In a possible design, the first signal includes a downlink signal and/or an uplink signal, the downlink signal indicates an uplink transmission resource and/or a downlink transmission resource, and the uplink signal is used to request the uplink transmission resource and/or the downlink transmission resource.

In a possible design, when transiting to the second mode or the third mode, the processing unit 1210 transits to the second mode or the third mode based on a requirement, where the requirement includes the first requirement or the second requirement.

In a possible design, the transiting to the second mode or the third mode based on the requirement includes: transiting to the second mode based on the first requirement; or transiting to the third mode based on the second requirement.

In a possible design, the processing unit 1210 is further configured to determine the first requirement or the second requirement based on a transmission status of the terminal.

In a possible design, the transmission status of the terminal includes at least one of the following: a service type of the terminal, a service data amount of the terminal, quality of service QoS corresponding to service data of the terminal, or a transmission parameter of service data of the terminal.

In a possible design, the transceiver unit 1220 is further configured to send the transmission status of the terminal to a first module, where the first module is configured to determine the requirement through artificial intelligence AI; and receive third indication information from the first module, where the third indication information indicates the requirement.

In a possible design, the transceiver unit 1220 is further configured to send fourth indication information to the access network device, where the fourth indication information indicates to transit to the second mode or the third mode.

In a possible design, the transceiver unit 1220 is further configured to receive fifth indication information from the access network device, where the fifth indication information indicates to transit to the second mode or the third mode.

In a possible design, when transiting to the second mode or the third mode, the processing unit 1210 transits to the second mode or the third mode based on the fifth indication information.

When the communication apparatus 1200 is configured to implement the functions of the access network device in the procedures in FIG. 2 to FIG. 11, specifically, the processing unit 1210 is configured to determine that a terminal transits to a second mode or a third mode, where the second mode corresponds to a first requirement of the terminal, the third mode corresponds to a second requirement of the terminal, and the first requirement or the second requirement includes a requirement for transmission between the terminal and a network. The processing unit 1210 is further configured to communicate with the terminal based on the second mode or the third mode.

In a possible design, when determining that the terminal transits to the second mode or the third mode, the processing unit 1210 controls the transceiver unit 1220 to receive fourth indication information from the terminal, where the fourth indication information indicates to transit to the second mode or the third mode.

In a possible design, when determining that the terminal transits to the second mode or the third mode, the processing unit 1210 determines, based on a requirement, that the terminal transits to the second mode or the third mode.

In a possible design, the determining, based on the requirement, that the terminal transits to the second mode or the third mode includes: determining, based on the first requirement, that the terminal transits to the second mode; or determining, based on the second requirement, that the terminal transits to the third mode.

In a possible design the processing unit 1210 is further configured to determine the first requirement or the second requirement based on a transmission status of the terminal.

In a possible design, the transceiver unit 1220 is further configured to receive sixth indication information from a core network device, where the sixth indication information indicates the transmission status of the terminal.

In a possible design, the transmission status of the terminal includes at least one of the following: a service type of the terminal, a service data amount of the terminal, quality of service QoS corresponding to service data of the terminal, or a transmission parameter of service data of the terminal.

In a possible design, the transceiver unit 1220 is further configured to send the transmission status of the terminal to a first module, where the first module is configured to determine the requirement through artificial intelligence AI; and receive seventh indication information from the first module, where the seventh indication information indicates the requirement.

In a possible design, the transceiver unit 1220 is further configured to send fifth indication information to the terminal, where the fifth indication information indicates to transit to the second mode or the third mode.

In a possible design, the processing unit 1210 is further configured to determine a first configuration and/or a second configuration, where the first configuration is used by the terminal to communicate with the access network device in the second mode, and the second configuration is used by the terminal to communicate with the access network device in the third mode.

In a possible design, the determining the first configuration and/or the second configuration includes: receiving first indication information from the terminal, where the first indication information indicates the first configuration and/or the second configuration; or activating the first configuration and/or the second configuration, and sending second indication information to the terminal, where the second indication information indicates the first configuration and/or the second configuration; or generating the first configuration and/or the second configuration, and sending first configuration information to the terminal, where the first configuration information is used to configure the first configuration and/or the second configuration.

In a possible design, the first configuration includes at least one of the following: a first sub-configuration, a second sub-configuration, or a third sub-configuration.

The first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

In a possible design, the first signal includes a downlink signal and/or an uplink signal, the downlink signal indicates an uplink transmission resource and/or a downlink transmission resource, and the uplink signal is used to request the uplink transmission resource and/or the downlink transmission resource.

In a possible design, the generating the first configuration and/or the second configuration includes: A first unit generates a third configuration, where the third configuration is a configuration corresponding to the first unit. A second unit generates a fourth configuration, and sends the fourth configuration to the first unit, where the fourth configuration is a configuration corresponding to the second unit. The first unit generates the first configuration and/or the second configuration based on the third configuration and the fourth configuration.

In a possible design, that the transceiver unit 1220 sends the fifth indication information to the terminal includes: The first unit sends the fifth indication information to the second unit. The second unit sends the fifth indication information to the terminal.

In a possible design, that the transceiver unit 1220 sends the fifth indication information to the terminal includes: The first unit sends eighth indication information to the second unit, where the eighth indication information indicates to transit to the second mode or the third mode. The second unit sends the fifth indication information to the terminal.

For more detailed descriptions of the processing unit 1210 and the transceiver unit 1220, refer to the descriptions of FIG. 2 to FIG. 11 in the foregoing method embodiments. Details are not described herein again.

It may be understood that, in embodiments of this application, division into the units is an example, and is merely logical function division. During actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods shown in FIG. 2 to FIG. 11, the processor 1310 is configured to implement functions of the foregoing processing unit 1210, and the interface circuit 1320 is configured to implement functions of the foregoing transceiver unit 1220.

When the foregoing communication apparatus is a chip used in a terminal, the chip implements the functions of the terminal in the foregoing method embodiments. The chip receives, through another module (for example, a radio frequency module or an antenna) in the terminal, information sent by an access network device to the terminal; or the chip sends information to another module (for example, a radio frequency module or an antenna) in the terminal, where the information is sent by the terminal to an access network device.

When the communication apparatus is a module used in an access network device, the module implements functions of the access network device in the foregoing method embodiments. The module receives information from another module (for example, a radio frequency module or an antenna) in the access network device, where the information is sent by a terminal to the access network device. Alternatively, the module sends information to another module (for example, a radio frequency module or an antenna) in the access network device, where the information is sent by the access network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In this embodiment of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC.

An embodiment of this application further provides a communication apparatus. The communication apparatus includes a processor and a memory. The processor is coupled to the memory, and the processor is configured to implement functions of the terminal or the access network device in FIG. 2 to FIG. 11.

An embodiment of this application further provides a communication apparatus, including a processor. The processor is configured to implement functions of the terminal or the access network device in FIG. 2 to FIG. 11.

An embodiment of this application further provides a computer-readable storage medium. The computer-readable storage medium stores instructions, and the instructions may also be referred to as a computer program, computer program code, or the like. The instructions are run on a computer, so that the computer performs functions of the terminal or the access network device in FIG. 2 to FIG. 11 in the foregoing method embodiments.

An embodiment of this application further provides a computer program product, including a computer program or instructions. When the computer program or the instructions are run on a computer, the methods of the terminal or the access network device in FIG. 2 to FIG. 11 are implemented.

An embodiment of this application further provides a chip. The chip includes a processor, the processor is coupled to a memory, and the processor is configured to execute a computer program or instructions stored in the memory, so that functions of the terminal or the access network device in FIG. 2 to FIG. 11 are implemented.

An embodiment of this application further provides a communication system, including a first communication apparatus and a second communication apparatus. The first communication apparatus and the second communication apparatus may be respectively configured to implement functions of the terminal and the access network device in FIG. 2 to FIG. 11.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, comprising:
entering a first mode, wherein the first mode is used to perform a first procedure, and the first procedure is used to establish a terminal context on a core network side and/or a terminal context on an access network side; and
transiting to a second mode or a third mode, wherein the second mode or the third mode is used for communication between a terminal and a network, the second mode corresponds to a first requirement of the terminal, the third mode corresponds to a second requirement of the terminal, and the first requirement or the second requirement comprises a requirement for transmission between the terminal and the network.

2. The method according to claim 1, further comprising:
determining a first configuration and/or a second configuration, wherein the first configuration is used by the terminal to communicate with an access network device in the second mode, and the second configuration is used by the terminal to communicate with the access network device in the third mode.

3. The method according to claim 2, wherein the determining the first configuration and/or the second configuration comprises:
activating the first configuration and/or the second configuration, and sending first indication information to the access network device, wherein the first indication information indicates the first configuration and/or the second configuration; or
receiving second indication information from the access network device, wherein the second indication information indicates the first configuration and/or the second configuration; or
receiving first configuration information from the access network device, wherein the first configuration information is used to configure the first configuration and/or the second configuration.

4. The method according to claim 2 or 3, wherein the first configuration comprises at least one of the following: a first sub-configuration, a second sub-configuration, or a third sub-configuration; and
the first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

5. The method according to claim 4, wherein the first signal comprises a downlink signal and/or an uplink signal, the downlink signal indicates an uplink transmission resource and/or a downlink transmission resource, and the uplink signal is used to request the uplink transmission resource and/or the downlink transmission resource.

6. The method according to any one of claims 1 to 5, wherein the transiting to the second mode or the third mode comprises:
transiting to the second mode or the third mode based on a requirement, wherein the requirement comprises the first requirement or the second requirement.

7. The method according to claim 6, wherein the transiting to the second mode or the third mode based on the requirement comprises:
transiting to the second mode based on the first requirement; or
transiting to the third mode based on the second requirement.

8. The method according to claim 7, further comprising:
determining the first requirement or the second requirement based on a transmission status of the terminal.

9. The method according to claim 8, wherein the transmission status of the terminal comprises at least one of the following: a service type of the terminal, a service data amount of the terminal, quality of service QoS corresponding to service data of the terminal, or a transmission parameter of service data of the terminal.

10. The method according to any one of claims 6 to 9, further comprising:
sending the transmission status of the terminal to a first module, wherein the first module is configured to determine the requirement through artificial intelligence AI; and
receiving third indication information from the first module, wherein the third indication information indicates the requirement.

11. The method according to any one of claims 6 to 10, further comprising:
sending fourth indication information to the access network device, wherein the fourth indication information indicates to transit to the second mode or the third mode.

12. The method according to any one of claims 1 to 5, further comprising:
receiving fifth indication information from the access network device, wherein the fifth indication information indicates to transit to the second mode or the third mode.

13. The method according to claim 12, wherein the transiting to the second mode or the third mode comprises:
transiting to the second mode or the third mode based on the fifth indication information.

14. A communication method, comprising:
determining that a terminal transits to a second mode or a third mode, wherein the second mode corresponds to a first requirement of the terminal, the third mode corresponds to a second requirement of the terminal, and the first requirement or the second requirement comprises a requirement for transmission between the terminal and a network; and
communicating with the terminal based on the second mode or the third mode.

15. The method according to claim 14, wherein the determining that the terminal transits to the second mode or the third mode comprises:
receiving fourth indication information from the terminal, wherein the fourth indication information indicates to transit to the second mode or the third mode.

16. The method according to claim 14, wherein the determining that the terminal transits to the second mode or the third mode comprises:
determining, based on a requirement, that the terminal transits to the second mode or the third mode.

17. The method according to claim 16, wherein the determining, based on the requirement, that the terminal transits to the second mode or the third mode comprises:
determining, based on the first requirement, that the terminal transits to the second mode; or
determining, based on the second requirement, that the terminal transits to the third mode.

18. The method according to claim 17, further comprising:
determining the first requirement or the second requirement based on a transmission status of the terminal.

19. The method according to claim 18, further comprising:
receiving sixth indication information from a core network device, wherein the sixth indication information indicates the transmission status of the terminal.

20. The method according to claim 18 or 19, wherein the transmission status of the terminal comprises at least one of the following: a service type of the terminal, a service data amount of the terminal, quality of service QoS corresponding to service data of the terminal, or a transmission parameter of service data of the terminal.

21. The method according to any one of claims 16 to 20, further comprising:
sending the transmission status of the terminal to a first module, wherein the first module is configured to determine the requirement through artificial intelligence AI; and
receiving seventh indication information from the first module, wherein the seventh indication information indicates the requirement.

22. The method according to any one of claims 16 to 21, further comprising:
sending fifth indication information to the terminal, wherein the fifth indication information indicates to transit to the second mode or the third mode.

23. The method according to any one of claims 14 to 22, further comprising:
determining a first configuration and/or a second configuration, wherein the first configuration is used by the terminal to communicate with an access network device in the second mode, and the second configuration is used by the terminal to communicate with the access network device in the third mode.

24. The method according to claim 23, wherein the determining the first configuration and/or the second configuration comprises:
receiving first indication information from the terminal, wherein the first indication information indicates the first configuration and/or the second configuration; or
activating the first configuration and/or the second configuration, and sending second indication information to the terminal, wherein the second indication information indicates the first configuration and/or the second configuration; or
generating the first configuration and/or the second configuration, and sending first configuration information to the terminal, wherein the first configuration information is used to configure the first configuration and/or the second configuration.

25. The method according to claim 23 or 24, wherein the first configuration comprises at least one of the following: a first sub-configuration, a second sub-configuration, or a third sub-configuration; and
the first sub-configuration is used to configure a first signal, and the first signal is used by the terminal to perform at least one of the following in the second mode: mobility management, a dynamic transmission resource indication, or a mode transition; the second sub-configuration is used to configure a radio bearer, and the second sub-configuration is a predefined configuration or a common configuration; and the third sub-configuration is used to configure a periodic transmission resource, and the third sub-configuration is a predefined configuration, a common configuration, or a dedicated transmission resource configuration.

26. A communication apparatus, comprising a unit configured to implement the method according to any one of claims 1 to 13, or a unit configured to implement the method according to any one of claims 14 to 25.

27. A communication apparatus, comprising a processor and a memory, wherein the processor is coupled to the memory, and the processor is configured to implement the method according to any one of claims 1 to 13 or the method according to any one of claims 14 to 25.

28. A computer-readable storage medium, wherein the computer-readable storage medium stores instructions, and when the instructions are run on a computer, the computer is enabled to perform the method according to any one of claims 1 to 13 or the method according to any one of claims 14 to 25.

29. A chip, comprising a processor, wherein the processor is coupled to a memory, and the processor is configured to execute a computer program or instructions stored in the memory, to enable the chip to implement the method according to any one of claims 1 to 13 or the method according to any one of claims 14 to 25.

30. A communication system, comprising a first communication apparatus and a second communication apparatus, wherein
the first communication apparatus is configured to implement the method according to any one of claims 1 to 13; and
the second communication apparatus is configured to implement the method according to any one of claims 14 to 25.
